(19) **Europäisches Patentamt**
**European Patent Office**
**Office européen des brevets**

(11) **EP 2 026 571 A2**

(12) **EUROPEAN PATENT APPLICATION**

(43) Date of publication:
**18.02.2009 Bulletin 2009/08**

(51) Int Cl.:
***H04N 5/74*** *(2006.01)*

(21) Application number: **08252266.5**

(22) Date of filing: **03.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **08.08.2007 JP 2007206644**

(71) Applicant: **Hitachi Ltd.**
**Chiyoda-ku**
**Tokyo 100-8280 (JP)**

(72) Inventors:
• **Hirata, Koji**
  **Tokyo 100-8220 (JP)**
• **Yatsu, Masahiko**
  **Tokyo 100-8220 (JP)**
• **Ikeda, Hidehiro**
  **Tokyo 100-8220 (JP)**

(74) Representative: **Calderbank, Thomas Roger et al**
**Mewburn Ellis LLP**
**33 Gutter Lane**
**London**
**EC2V 8AS (GB)**

(54) **A liquid crystal display apparatus and a rear projection unit, and an electronic blackboard apparatus comprising a liquid crystal display apparatus**

(57)    In a liquid crystal display apparatus, comprising a liquid crystal panel 170 and a rear projection device for projecting a light (i.e., a backlight) upon that liquid crystal panel from a rear surface side thereof, the rear projection device comprises a rear projection device (unit) 100, including therein a short-range oblique light projection optic system for projecting a light from a light source 101, obliquely and enlargedly, on a rear surface side of the liquid crystal panel 170; thereby providing a rear projection apparatus, etc., which can be applied in a direct-vision type thin image display apparatus, while disposing the liquid crystal panel separating from heat generation, so as to reduce the ill influences thereof.

FIG . 1

## Description

The present invention relates to a liquid crystal display apparatus for displaying an image upon an image display screen, which is made up with a liquid crystal panel, and it relates, in particular, to a liquid crystal display apparatus having a rear projection unit of a new structure, i.e., projecting a light upon a rear surface of the liquid crystal panel, and the rear projection unit for the same.

In recent years, as a display panel to be applied in a thin image display apparatus of a direction-vision type is widely used a liquid crystal panel or the like, as well as, a PDP (e.g., a Plasma Display Panel). However, in general, the liquid crystal panel is low in the contrast (or being called "contract ratio") thereof, by around a single digit, comparing to that of the PDP, on the other hand, the PDP has shortage of brightness in particular, when displaying a white all over the display screen thereof, etc. , i.e. , there are remained problems to be dissolved, respectively. Also, inparticular, with the liquid crystal panel, a liquid crystal panel having a large area thereof can be also manufactured, due to an improvement of manufacturing technologies of panel makers and/or initial investment, and therefore the liquid crystal display apparatus, applying that large-sized liquid crystal panel therein, is also widely spread, as a large-sized display apparatus, in the similar manner to the PDP.

By the way, within the liquid crystal display apparatus applying the liquid crystal panel as an image display element, for the purpose of increasing a visibility thereof, normally, on a rear surface thereof is provided a device for projecting or irradiating a back surface light, being called "a backlight", and this device is construed with a rectangular light emission surface, which is formed by aligning a plural number of fluorescent lighting tubes (CCFL) in parallel, for example. For this reason, the liquid crystal panel generates almost no heat by itself, but due to heat generation from the rear projection device mentioned above, that heat generation is accumulated within a housing, which builds up that light emission surface, in particular, in the liquid crystal display apparatus having the large display area thereof. For that reason, that heat generation comes up to be a problem, in the similar manner to the plasma displayuponbasis of a light emission principle accompanying heat generation, and the heat generation is remarkable in the rear projection device on a rear surface portion thereof, in particular, within the liquid crystal display apparatus having a large display area thereof. However, the heat generation on the rear surface of such the liquid crystal display apparatus, sometimes results in restriction on places where that liquid crystal display apparatus can be installed (for example, the rear surface of the apparatus must be separated from a wall surface) , in particular, when it is used as a display apparatus of a television receiver, for example. Further, as the conventional technologies in relation to lighting control, for example, so-called a backlight control is already known in the following Patent Document 1, and also control for changing a light amount emitted from a light source by means of a liquid crystal panel in the following Patent Document 2.

In addition thereto, in recent years, proposed various kinds are proposed as those for applying such large display therein, not limited only to displaying of images thereon, as the conventional arts, but also an electronic blackboard for enabling writing together with the pictures displayed thereon, and also a presentation apparatus for reading the contents written thereon to display them clearly, etc., as is already known by the following Patent Documents 3 and 4.

[Patent Document 1] Japanese Patent Laying-Open No. 2006-30588 (2006);

[Patent Document 2] Japanese Patent Laying-Open No. Hei 6-230367 (1992);

[Patent Document 3] Japanese Patent Laying-Open No. Hei 10-229463 (1998); and

[Patent Document 4] Japanese Patent Laying-Open No. Hei 11-38902 (1999).

However,the conventionalarts,in particular,the backlight device disclosed in the Patent Document 1 discloses therein a technology for forming an image upon conducting the backlight control for each unit of pixels, with using applying LED (Light Emitting Diode) as a light source. However, when trying to correspond one (1) piece of LED to one (1) pixel of the liquid crystal panel, since the pixel number is 1920x1080 in case when receiving a digital terrestrial TV broadcasting, then an expansive number of LED (Light Emitting Diode) comes to be necessary, and this brings about cost-up, greatly. Of course, even if trying to correspond one (1) LED to a plural number of pixels, but there is still necessity of a considerable number of LED, by taking a control of high-quality into the consideration, and therefore it is impossible to avoid the great cost-up therefrom. In particular, since the pixel number is reduced, corresponding to one (1) piece of LED accompanying large-sizing of the display screen (for example, 37 to 60 inches), there is a possibility of brining up the cost-up to be remarkable.

Also, within the Patent Document 2 mentioned above is disclosed a technology of disposing the liquid crystal panel that can change the light amount emitted from a light source, between the light source and the liquid crystal panel for use of displaying images thereon (i.e., an image forming), i.e., the said technology conducts such a variable control that the light amount irradiated from the light source upon the liquid crystal panel comes to be equal to the same covering over the entire region thereof. However, on the process of advancing the consideration on that technology, the present inventors notice that a lighting control can be achieved on the brightness, depending upon the pixel number of the liquid crystal panel, if conducting the control upon the light amount for each pixel, by applying that present technology therein. However, in case when applying that technology into a direct-vision type image display apparatus, since there is necessity of a panel having the same size to that of the liquid crystal panel for use of image display, as the liquid crystal panel, this also brings about the cost-up, and in particular, this cost-up comes up to be remarkable, accompanying large-sizing of the display screen. Also, using the liquid crystal panel for the purpose of controlling the lighting brings about a necessity of disposing a polarizing plate on the incidence side thereof, however since about a half of the lights emitted from the light source comes out from the use thereof due to disposition of this polarizing plate, there is also a problem of reducing the brightness.

Inaddition thereto, heat generation from the rearprojection device (or unit) mentioned above deteriorates the liquid crystal panel of building up the image display portion for the image display apparatus, and further the polarizing plate included in a part thereof, thereby shortening the lifetime thereof, and in turns, it gives ill influences of shortening the lifetime of the apparatus as a whole; therefore it is preferable to isolate it/them from the heat generation generated from that rear projection device.

Thus, as was mentioned above, in the liquid crystal display apparatus applying the liquid crystal panel as an image display element, and in particular, within the device for generating the backlight to be irradiated upon the rear surface of the liquid crystal panel, for increasing the visibility thereof, there is a demand of technology for reducing the ill influences due to the heat generation of the rear projection device (or, unit), by isolating that heat generation from the liquid crystal panel, as well as, reduction of electric power consumption therein, with a relatively cheap price.

In particular, in case when applying such the liquid crystal display apparatus to be the electronic blackboard mentioned above, for the purpose of enabling the writing by a user, there is necessity of attaching a protection surface, such as, a glass plate, for example, on the surface of the display. For that reason, the heat generation on the rear surface of the display apparatus results to be accumulated, further, within the housing thereof, and at the same time, the heat from such display surface also gives a feeling that something is wrong and/or a malaise to a person who is operating or using that electronic blackboard.

The present invention may provide a liquid crystal display apparatus, for displaying an image on the image display screen made up with the liquid crystal panel, which lessens the ill influences due to the heat generation from the rear projection device by applying a rear projection device, which can be disposed at a position separated or isolated from the liquid crystal panel. The invention may also provide a new rear projection unit, which can be constructed relatively cheaply, and further may provide an electronic blackboard incorporating the liquid crystal display apparatus.

According to the present invention, there is provided a liquid crystal display apparatus, comprising: a liquid crystal display apparatus; and a rear projection unit for projecting a rear surface light on said liquid crystal display apparatus from a rear surface thereof, wherein said rear projection unit has an oblique projection optic system for projecting a light from a light source upon said liquid crystal display apparatus, enlargedly and obliquely, from a rear surface side thereof.

Further, according to the present invention, within the liquid crystal display apparatus described in the above, it is preferable that said oblique projection optic system includes a free curved surface mirror disposed in a part thereof, so as to reflect the light from said light source thereupon, thereby projection the rear surface light said liquid crystal display apparatus, from a rear surface side thereof, and further that, between said free curved surface mirror and the rear surface of said liquid crystal display apparatus is further disposed a plane-surface reflection mirror. Or, within the liquid crystal display apparatus, as described in the above, it is preferable that, on a rear surface of said liquid crystal display apparatus is further provided a light direction converter unit for emitting the light incident from said oblique projection optic system, nearly vertical to a display surface of said liquid crystal display apparatus, and further that in a part of said oblique projection optic system is provided a light modulator unit for modulating a light intensity of said rear surface light, or that said oblique projection optic system further comprises a free curved surface lens. In addition thereto, according to the present invention, it is preferable that the liquid crystal display apparatus as described in the above further comprises a means for equalizing a light mount distribution of illumination light from said light source, between said light source and said liquid crystal panel.

And, according to the present invention,
there is also provided an electronic blackboard apparatus, applying said liquid crystal display apparatus described above, as a display surface thereof.

In addition to the above, according to the present invention, there is further provided, a rear projection unit, to be used as a backlight for a liquid crystal display apparatus, being constructed with an oblique projection optic system for projecting a light from a light source upon said liquid crystal display apparatus, obliquely and enlargedly, from a rear surface side of said liquid crystal display apparatus, comprising: a free curved surface mirror, in a part thereof, for reflecting the light from said light source, thereby projecting a rear surface light upon said liquid crystal display apparatus from the rear surface thereof.

**EP 2 026 571 A2**

And, according to the present invention, within the rear projection unit as described in the above, it is preferable that, between said free curved surface mirror and the rear surface of said liquid crystal display apparatus is further disposed a plane-surface reflection mirror, or that it further comprises a light modulator unit for modulating a light intensity of said rear surface light, in a part thereof. Further, it is preferable that it further comprises a free curved surface lens, or that it further comprises a means for equalizing light amount distribution of an illumination light from said light source, between said light source and said free curved surface mirror.

According to the present invention mentioned above, there can be achieved superior effects; i.e., providing the liquid crystal display apparatus, for displaying an image on an image display screen, which is made of a liquid crystal panel, and for lessening the ill effects due to the heat generation from the rear projection unit, with applying the rear projection unit, which can be disposed at a place far from the display apparatus. And, therefore, it is possible to provided a new rear projection unit, which can be constructed with relatively cheap cost, and further an electronic blackboard apparatus applying such the liquid crystal display apparatus.

Those and other objects, features and advantages of the present invention will become more readily apparent from the following detailed description when taken in conjunction with the accompanying drawings wherein:

Fig. 1 is a perspective view for showing an entire of a direct-vision type thin image display apparatus, as a liquid crystal display apparatus, according to an embodiment of the present invention, and for explaining a principle of projecting the rear surface light (e.g. the backlight) thereof;

Fig. 2 is a view for showing elements of the image display apparatus, diagrammatically, including a rear projection device (or, unit), which builds up a short-range oblique projection optic system for projecting an image from a rear surface short range within the liquid crystal display apparatus;

Fig. 3 is a cross-section view for showing the basic structures of the projection optic system, including the rear projection device (or, unit) mentioned above therein;

Fig. 4 is a perspective view for showing the details of each of constituent elements, including lenses therein, building up the projection optic system mentioned above;

Fig. 5 shows cross-section views for showing the lens surfaces, building up the projection optic system mentioned above;

Fig. 6 is Y-Z cross-section view of the projection optic system, for showing the light beams therein;

Fig. 7 is X-Z cross-section view of the projection optic system, for showing the light beams therein;

Fig. 8 is a view for showing distortion performances achieved by the projection optic system mentioned above;

Fig. 9 is a view for showing spot performances achieved by the projection optic system mentioned above;

Figs. 10 (a) and 10 (b) are views for showing the structures, diagrammatically,of a refraction-type Fresnel lens sheet building up the projection optic system mentioned above;

Fig. 11 is a view for showing an example of a method for determining the surface configuration of a prism, building up the refraction-type Fresnel lens sheet within a refraction region thereof;

Fig. 12 is a view for showing a relationship between the prism surface and an original surface within the refraction region thereof;

Fig. 13 is a view for showing the structures, diagrammatically, of a variation (e.g., a variation 1) of the rear projection device (or, unit) within the liquid crystal display apparatus mentioned above;

Fig. 14 is a cross-section view for showing a polarized light converter element within the rear projection device (or, unit) shown in Fig. 13 mentioned above, being cut along a longitudinal side of the liquid crystal panel, including an optical axis thereof;

Fig. 15 is a view for showing the structures, diagrammatically, of other variation (e.g., a variation 2) of the rear projection device (or, unit) within the liquid crystal display apparatus mentioned above;

Fig. 16 is a view for showing the structures, diagrammatically, of further other variation (e.g., a variation 3) of the rear projection device (or, unit) within the liquid crystal display apparatus mentioned above;

Fig. 17 is a perspective view for showing an example of applying the liquid crystal display apparatus mentioned above into a presentation apparatus, such as, so-called an electronic blackboard apparatus, for example;

Fig. 18 is a cross-section view for showing the basic structures of the projection optic system within the electronic blackboard apparatus shown in Fig. 17 mentioned above;

Fig. 19 is a block diagram for showing an example of the structures of the electronic blackboard apparatus shown in Fig. 17 mentioned above; and

Fig. 20 is a view for showing other example of the rear projection device (or, unit).

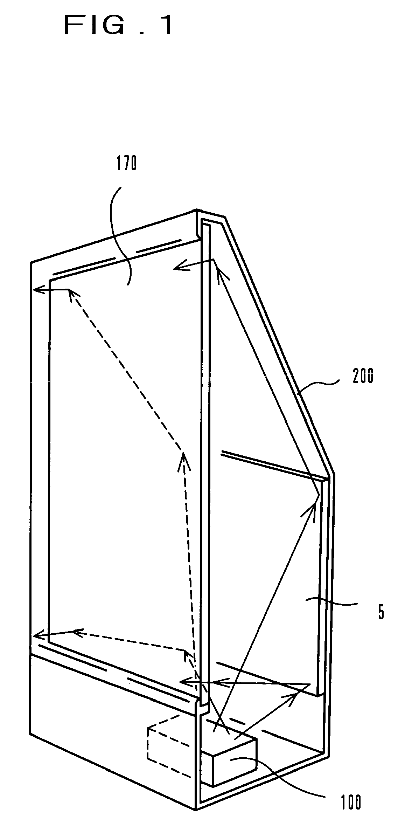

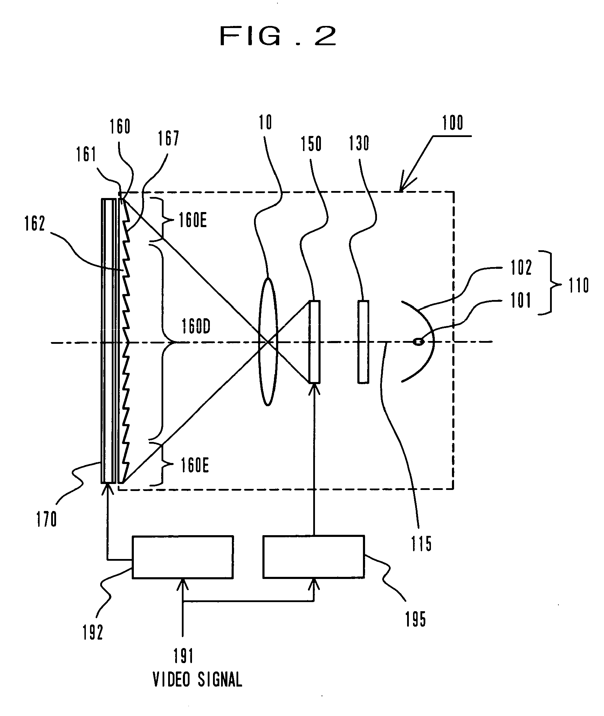

Hereinafter, embodiments according to the present invention will be fully explained by referring to the attached drawings. However, in each of the figures below, an element having a common function is shown by attaching a same reference numeral thereto, and with that, which was explained once, duplicated explanation thereof will be omitted.
First of all, Fig. 1 attached herewith shows a liquid crystal display apparatus, according to an embodiment of the present invention, and explains about a liquid crystal panel 170 within a direct-vision type thin image display apparatus, and in particular, the principle of projecting a light (e.g., a backlight) from a rear surface of that liquid crystal panel 170. Thus, on a rear surface side of the large-sized liquid crystal panel 170 building up a display screen of the image display apparatus, there is disposed a rear projection device (or, unit) 100, the details of which will be explained later, for projecting the a rear surface light (e.g. , the backlight), from an oblique direction onto that panel, in the condition of being separated or isolated therefrom. With this, heat generation generated from that rear projection device (or, unit) 100, and further, from a driver circuit thereof (i.e., heat generation sources), is prevented from being transmitted to the liquid crystal pane 170, directly. However, herein is disclosed an example, wherein a plane reflection plate 5 is attached on an inside rear surface of a housing 200 building up an outer configuration of the thin image display apparatus.
Following to the above, in Fig. 2 attached herewith is shown a liquid crystal display apparatus, diagrammatically, including the rear projection device (or, unit) 100 mentioned above therein, which builds up an oblique projection optic system for achieving projection, enlargedly, in the oblique direction from a rear surface side thereof. This rear projection device (or, unit) 100 is a short-range oblique projection optic system, being so constructed that it can project a light from a light source on the liquid crystal panel 170, within a relatively short range or distance, and the detailed structures thereof will be mentioned later. In this Fig. 2, for the purpose of easy understanding of the explanation, each of the constituent elements thereof is shown, diagrammatically, but neglecting an actual size thereof. Also, in the embodiments shown below, explanation will be given on an example of applying a transmission-type liquid crystal panel therein, as a light modulation portion or unit.
In Fig. 2, the rear projection device (or, unit) 100 for lighting (i.e., irradiating the backlight upon) the image display liquid crystal panel 170 of conducting a color display thereon, upon basis of a video signal obtained on receipt of a television broadcast, for example, is constructed by disposing the following constituent elements, successively, from the opposite side to the liquid crystal panel. Thus, it is constructed with comprising the followings therein: i.e., a light source 110 for emitting an about white light, a polarized light converter element 130 for aligning the light, which is emitted from that light source 110 without polarization, into a desired polarizing direction, thereby conducting conversion into a predetermined polarized light, a liquid crystal panel 150 (i.e., a light modulation unit) for modulating the polarized light (i.e., the white color light) from that polarized light converter element 130, thereby conducting light modulation, an enlarged projection device 10 for projecting the light beam, which is modulated through that liquid crystal panel 150, enlargedly, directing in the oblique direction onto the image display liquid crystal panel 170 from the super short-range, and a Fresnel lens sheet (a light direction converter portion or unit) 160. Further, the enlarged projection device 10 includes a free curved surface mirror and/or a free curved surface lens, though the details thereof will be mentioned later, but herein, as an idea thereof, it is depicted in the form of a lens. However, the rear projection device (or, unit) 100, according to the present embodiment, is constructed so that it is able to project an enlarged optical image, being larger than the liquid crystal panel 170 by about 2-15%, onto that liquid crystal panel 170. In other words, such rear projection device (or, unit) 100 is that for projecting the enlarged optical image with over-scanning of about 2-15%, onto that liquid crystal panel 170. With this, it is possible to reduce or prevent from the ill influences due to the errors in assembling or attaching various kinds of optical parts, such as, the rear projection device (or, unit) 100 or the plane reflection plate 5, etc., (for example, "an image fragment", which is caused by the fact that the enlarged optical image cannot be projected upon a part of the liquid crystal panel 170).
The image display liquid crystal panel 170 modulates (i.e. , modulation of light intensity) the light irradiated from the rear projection device (or, unit) 100, for example, upon basis of the video signal 191 mentioned above, through a panel driver circuit 192, thereby building up a picture light (color) of the display image, to be emitted therefrom. However, herein is applied a liquid crystal panel of TFT (Thin Film Transistor) type, as a large-screen liquid crystal TV of direction-vision type, having a ratio between the vertical and the horizontal 16:9, a number of pixels 1,920 x 1,080, a screen size (a diagonal size L1 of an effective image display region) 27 to 60 inches, for example. In general, a contrast ratio of the TFT-type liquid crystal panel is nearly 1000:1. Further, though the image display liquid crystal panel 170 has a polarizing plate on both the incidence side and the emission side thereof, but are omitted from being depicted in the figure.

Also, the light source 110 has a lamp 101, such as, a high-pressure mercury lamp, having high brightness or luminance, for emitting a nearly white light, etc., for example, and includes a reflector 102 having a rotationally parabolic configuration covering the lamp 101 from the rear thereof, for reflecting the white light from the lamp 101, so as to convert it into parallel lights. In the present embodiment, as will be mentioned later, since the lights emitted from the light source 110 is irradiated upon the liquid crystal panel 150 for use of lighting, which is sufficiently small comparing to the image display liquid crystal panel 170, (i.e., conducting light modulation for the purpose of increasing the contrast through the light modulation), therefore it is possible to apply a discharge lamp, such as, the high-pressure mercury lamp, etc.

And, the light emitted from the lamp 101 is reflected upon the reflector 102, which has a reflection surface of rotationally parabolic configuration, for example, and it results into a light almost parallel to an optical axis 115; i.e., almost parallel light beam is emitted from the light source 110. The light emitted from the light source 110, thereafter, it is incident upon the polarized light conversion element 130.

The polarized light conversion element 130 aligns the lights without polarization, which are emitted from the light source 110 mentioned above, into a light, which is polarized into a predetermined polarization direction, and thereby converting into a predetermined polarized light. And, the light, after being polarized into the predetermined polarization direction through the polarization conversion element 130, then it is incident upon the liquid crystal panel 150.

This liquid crystal panel 150 conducts the light modulation (i.e., the modulation of light intensity) upon basis of the video signal 191 through the panel driver circuit 195, and builds up the optical image having light and shade for each of the pixels (hereinafter, being called "light modulation image"). However, herein, for the purpose of reducing a panel cost, it is assumed to apply a TN-type liquid crystal panel (i.e., the transmission type liquid crystal panel of single matrix drive, having a horizontal/vertical ratio 16:9, the number of pixels of WVGA 852 x 480 (the number of pixels of WQVGA 400 x 240 may be applied when giving priority onto the cost), the screen size (a diagonal size L2 of an effective image display region) 0.4 to 1.3 inches, for example.

As such liquid crystal panel can be applied a liquid crystal panel, in the place of that mentioned above, for example, which is used in a display apparatus of rear-surface projection type. Normally, the liquid crystal panel, being applied in such the rear-surface projection type display apparatus, is supplied with R, G and B signals corresponding to red, green and blue images for the purpose of full color display. However, according to the present embodiment, since it is sufficient for the liquid crystal panel 150 to modulate the light intensity for each of the pixels (no necessity of taking the full color display into the consideration), a brightness or luminance signal (Y signal) is supplied thereto, but not the R, G and B signals. Thus, within the present embodiment, to the image display liquid crystal panel 170 are supplied the R, G and B signals from the panel driver circuit 192, but as the video signal, while to the liquid crystal panel 150 is the luminance signal from the panel driver circuit 195 as the video signal. As such the luminance signal may be used a signal, which is separated within a Y/C circuit not shown in the figure and further is conducted with predetermined signal processes (for example, a contrast adjustment, a gamma compensation, etc.) thereupon within a video processing circuit not shown in the figure. It is also possible to apply a Y signal that is obtained with conducting a matrix calculation upon the R, G and B signals supplied to the image display liquid crystal panel 170. Of course, it is also possible to supply any one of the R, G and B signals to the liquid crystal panel 150 for use of lighting, one by one, periodically.

In general, the contrast ratio of the TN type liquid crystal panel is about 700:1, i.e., being lower than that of the TFT type. However, with the constructions according to the present invention, since the contract ratio is determined to be the product between the contrast ratio of the liquid crystal panel 150 and the contrast ratio of the image display liquid crystal panel 170. With this, it is possible to increase the contrast ratio, greatly, while using a panel of relatively cheap price (i.e., being low in the contrast ratio thereof), with certainty. Also, further for the purpose of lowering the panel price, it is also possible to apply a WVGA panel, the resolution of which is low comparing to that of the image display liquid crystal panel 170. However in this case, one (1) pixel of the liquid crystal panel 150 corresponds to a plural number of pixels of the image display liquid crystal panel 170. However, even if being small in the number of the corresponding pixels of the liquid crystal panel 170, since the size of the corresponding pixel region is sufficiently small, it is fully possible to accept to be a high-accuracy adjustment of lighting or illumination. Further, though the liquid crystal panel 150 has the polarizing plate on both the incidence side and the emission side thereof, however the illustration of them is omitted in the figure.

Also, the panel driver circuit 195 mentioned above has a scaling function (not shown in the figure), i.e., conducting the video processing, such as, the scaling, etc. , upon the video signal 191, corresponding to the resolution of the liquid crystal panel 150. Thereafter, with using well-known video information analysis function (not shown in the figure), such as, averaged brightness information, black level region detection, white level area detection, etc., for example, a light modulation image (i.e., an optical image) is made up from those information, being optically modulated in the luminance thereof, while driving the liquid crystal panel 150 with those information. Or, it is also possible to supply the brightness signal (after being treated with the scaling process, corresponding to the resolution of the liquid crystal panel 150, depending on necessity) to the liquid crystal panel 150, corresponding to the R, GandBsignals, which are supplied to the image display liquid crystal panel 170.

And, the projection device 10 projects the light modulation image, which is formed on the liquid crystal panel 150, toward the image display liquid crystal panel 170, while enlarging it. However, if applying the projection device therein, the size of depth of the image display apparatus comes to be thick. Then, though the details thereof will be mentioned later, there is applied an oblique projection, for the purpose of making the size of depth as thin as possible.

By the way, since the projection device 10 projects the light modulation image of the liquid crystal panel 150 onto the image display liquid crystal panel 170, it must satisfy the following condition:

$$10 < L1/l2 < 150 \quad \text{.........(Eq. 1)}$$

The liquid crystal panel, the smallest one at the present, is about 0.48 inch (in the diagonal size thereof), then it can be considered that a limit thereof is about 0.4 inch. Then, the screen size of the liquid crystal panel 150 is L2=0.4, while the screen size of the image display liquid crystal panel 170 is L1=60, then L1/l2=150. If L1/l2 exceeds 150, then there is brought about a problem that the brightness irradiated upon the image display liquid crystal panel 170 comes to dark. Therefore, it is preferable that L1/l2 is equal to or less than 150. With a lower limit thereof, although depending on the screen size of the liquid crystal panel 150, but it is preferable to determine L1/l2 to be equal to or greater than 10, at least, since not resulting into cost down if approaching it to the screen size of the image display liquid crystal panel 170. If applying a liquid crystal panel of the screen size L2=1.3 inch, near to the upper limit that can be applied within the general projection-type image display apparatus, as the liquid crystal panel 150, while determining the screen size of the image display liquid crystal panel 170 to L1=27 inches, then L1/l2=150, approximately, then it is possible to satisfy the condition mentioned above.

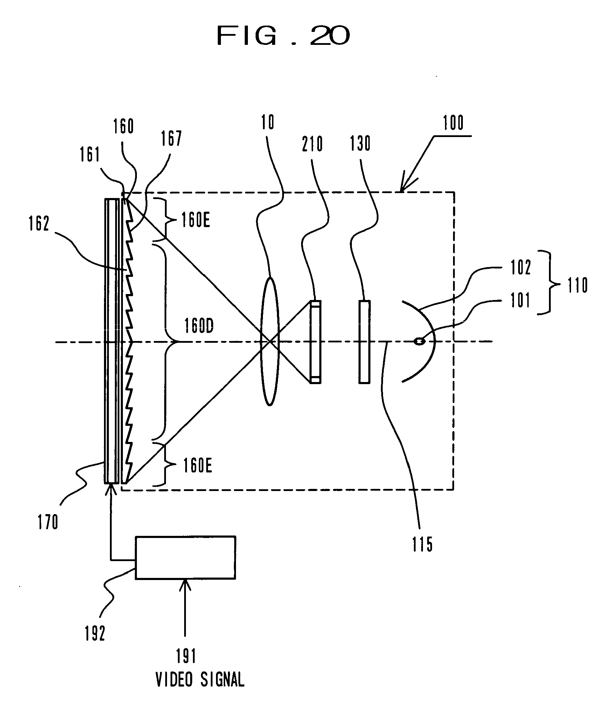

However, within the rear projection device (or, unit) 100 according to the present embodiment, it is not always necessary to apply the liquid crystal panel 150, but in the place of the liquid crystal panel 150 may be provided an aperture stop 210 having an opening configuration similar to that of a front surface of the liquid crystal panel 170, as is shown in Fig. 20, for example. In case where the aspect ratio is 16: 9 of the liquid crystal panel 170, for example, then the aspect ratio of the opening configuration of the aperture stop 210 is 16:9, or in case where the aspect ratio is set at 4:3 of the display surface of the liquid crystal panel 170, then the aspect ratio of the opening configuration of the opening aperture 210 is set at 4:3. By the function of this aperture stop 210, the light emitted from the light source is shaped, appropriately, and an optical image of the appropriate shape is projected onto the liquid crystal panel 170. In the case of the present embodiment, as is shown in Fig. 20, there is no necessity of such the panel driver circuit as is shown in Fig. 2 mentioned above.

Next, the Fresnel lens sheet 160 mentioned above is a unit, being so-called an optical direction conversion unit, for converting an oblique light from the projection device 10 such that it is incident upon the incident surface of the image display liquid crystal panel 170, almost vertically. Upon one surface of a material 161 building up this Fresnel sheet 160 (herein, a surface opposite to the side surface of the image display liquid crystal panel 170), there are formed a plural number of refraction type Fresnel lenses162, for refracting the lights, being incident thereon at the incident angle within a predetermined value, thereby emitting, and also total-reflection type Fresnel lenses 167, for totally reflecting the lights, being incident thereon at the incident angle larger than that predetermined value, concentrically. And, the oblique lights from the projection device 10 are refracted or totally reflected, upon the refraction type Fresnellenses162 or the total-reflection type Fresnel lenses 167, depending on the incident angle thereof, so that they are incident upon the incident surface of the image display liquid crystal panel 170, almost vertically (however, the further details thereof will be mentioned later).

As was mentioned above, with the liquid crystal display apparatus according to the above-mentioned embodiment, i.e. , the direct-vision type thin image display apparatus, on the side of the rear surface of the large-size liquid crystal panel 170 are projected the lights, being obtained by enlarging the light of the lamp 101 of high brightness, as the rear surface light (i.e., the backlight), from the rear projection device (or, unit) 100, being disposed while separating or isolating from that panel, in the oblique direction to that panel, then heat transmission can be suppressed, from the heat generation source, including that rear projection device (or, unit) 100 and the driver circuit thereof, etc. , to the liquid crystal panel 170. With this, the liquid crystal panel 170 and a polarizing plate attached in a part thereof can be prevented from being deteriorated due to that heat generation.

Also, within the rear projection device (or, unit) 100 for enabling an oblique and enlarged projection of the rear surface light (i.e., the backlight), in particular, the light modulation is conducted upon the video signal upon basis of video signal, while corresponding one (1) piece of the pixel on the liquid crystal panel 150 to the plural number of the pixels on the image display liquid crystal panel 170, with using the liquid crystal panel 150 being small in the size thereof, and thereby forming the light modulated image. And, that light modulated image is enlarged by means of the projection, and is projected upon the image display liquid crystal panel 170. With this, the contrast ratio, obtainable as the video display apparatus as the whole thereof, comes to the product of the contrast ratio of the liquid crystal panel 150 and the contrast ratio of the image display liquid crystal panel 170, and therefore it is possible to increase the contrast ratio, greatly.

Also, in addition to the mentioned above, with applying the liquid crystal panel 150, being sufficiently small comparing to the image display liquid crystal panel 170, it is also possible to reduce the size of the light source 110.

Accordingly, comparing to the conventional technology of applying the light source (i.e., a back light) therein, i.e., being built up with an expensive liquid crystal panel same in the size to the image display liquid crystal panel 170, and disposing a plural numbers of LED in parallel, although the rear projection device (or, unit) 100 and the Fresnel lenses mentioned above are necessary, in addition thereto; however, it is possible to reduce the cost of the rear projection device (or, unit) 100 down to around 2/3 to 1/2, since a liquid crystal panel of low resolution can be applied as the projection device thereof. And, for the purpose of obtaining further cost reduction of the apparatus, it may be also possible to delete the liquid crystal panel 150, as the constituent element for conducting the above-mentioned light modulation (i.e., the light intensity modulation) therein. Furthermore, Further, applying the liquid panel 150 and the light source 110 of exchangeable methods, respectively, also enables to increase the capability of services, greatly.

Although the explanation was given, in the above, in particular, on the structures wherein the one (1) pixel of the liquid crystal panel 150 for use of light modulation (i.e., the light intensity modulation) is made corresponding to a plural number of pixels of the image display liquid crystal panel 170; however, the present invention should not be restricted only to this, but it is needless to say that the one (1) pixel of the light modulation liquid crystal panel corresponds to one (1) pixel (the one (1) pixel including a set of R pixel, G pixel, and B pixel) of the color image display liquid crystal panel. Also, though applying the high-pressure mercury lamp therein, however there may be applied a LED or a laser device of white color light. In case where an amount of the light is short with such one piece of the LED or a laser light, there may be applied one of arranging a plural numbers of LED or laser devices.

In addition thereto, in the above although explaining about the example of applying the transmission type liquid crystal panel as the liquid crystal panel 150 for use of light modulation (i.e., the light intensity modulation), however in the place thereof, it is also possible to apply a reflection type light modulation element, such as, a liquid crystal panel (LCOS: Liquid Crystal on Silicon), or minute mirrors, etc., for example.

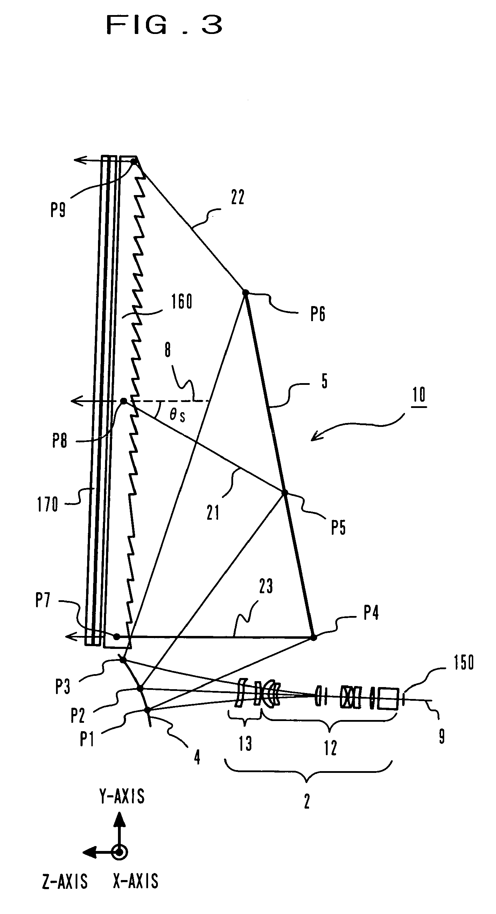

Next, explanation will be made, in particular, on a short-range oblique projection optic system, to be applied within the liquid crystal display apparatus mentioned above, for projecting a light, enlargedly, from the short distance on the rear surface side of the liquid crystal display apparatus, with using reflection upon a free curved surface mirror, which is disposed in a part thereof, for the purpose of reducing the size in depth of the apparatus, by referring to Figs. 3 to 9.

<Short-Range Oblique Projection Optic System>

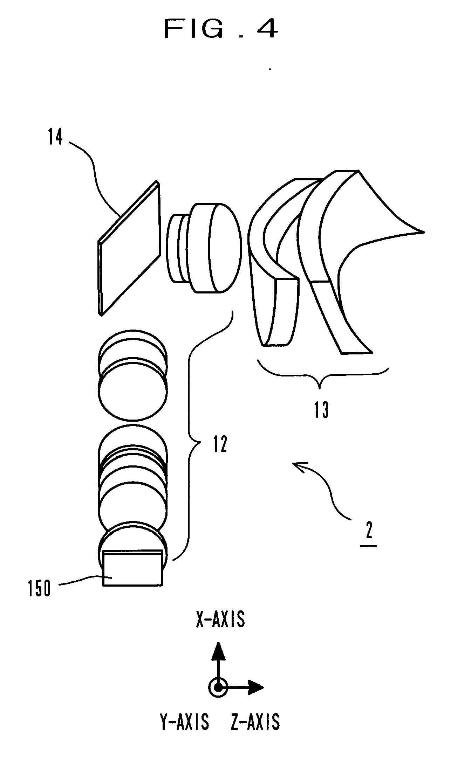

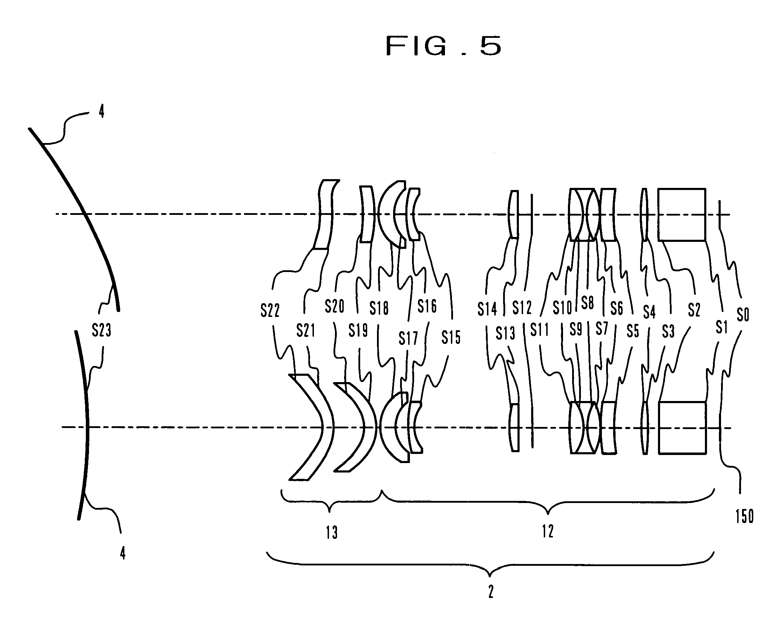

Firstly, Fig. 3 attached is a cress-section view for showing the basic or fundamental structures of the projection optic system mentioned above, wherein the structures of the optic system are shown on a YZ cross-section within XYX orthogonal coordinate systems. Herein, it is assumed that the origin or start point of the XYX orthogonal coordinate systems is at a center of the display screen of the liquid crystal panel 150, and the Z-axis thereof is in parallel with a normal line 8 of the image display liquid crystal panel 170. And, it is also assumed that the Y-axis thereof is in parallel with a short side of the display screen of the image display liquid crystal panel 170, and that it is equal to the image display liquid crystal panel 170 in the vertical direction thereof. Further, it is assumed that the X-axis thereof is in parallel with a longitudinal side of the display screen of the image display liquid crystal panel 170, and that it is equal to the image display liquid crystal panel 170 in the horizontal direction thereof. Also. Fig. 4 attached herewith is a perspective view of projection lenses building up the projection device, and Figs. 5(a) and 5(b) are cress-section views of those projection lenses, but omitting to show the bending of the optical path therein, within the projection lenses.

As is shown in Fig. 3, the enlargedprojectionunit 10 includes projection lenses 2, a freely curved surface mirror 4 as a first reflection mirror, and a plane reflection mirror 5 as a second reflection mirror, which are disposed or aligned on an optical path, directing from the liquid crystal panel 150 toward the Fresnel lens sheet 160 and the image display liquid crystal panel 170, sequentially from the liquid crystal panel 150. And, with such the structures mentioned above, the light modulation image upon the display screen of the liquid crystal panel 150 for use of light modulation (i.e., the light intensity modulation) is projected toward the image display liquid crystal panel 170, by means of the projection lenses 2. In this instance, if projecting it, straightly, there is a necessity of a predetermined distance, and this elongates the depth size of the image display apparatus. Thus, the depth of the image display apparatus comes to be thick. Then, the optical paths (i.e., the optical paths indicated by the light beams 21, 22 and 23), directing from the projection lenses 2 toward the image display liquid crystal panel 170, are bent upon the freely curved surface lens 4 and the plane reflection mirror 5, thereby reducing the depth of the image display apparatus to be small. Further, the light beam 21, emitting from a center of the screen of the liquid crystal panel 150 and directing to a center of the image display liquid crystal panel 170 (hereinafter, being called a "screen central light beam"), is non-vertical to the incident surface of the image display liquid crystal panel 170 (in general, such the projection is called an "oblique projection"), thereby reducing the depth of the image display apparatus.

Also, the projection lenses 2, as apparent from Fig. 3 mentioned above and also Fig. 4 attached herewith, are made up with a front group 12, including a plural number of refractive lenses, each having a rotationally symmetric surface configuration, and a rear group 13, including a lens, at least one of surfaces thereof having a freely curved surface configuration, being rotationally asymmetric (hereinafter, being called "freely curved surface lens").

However, in Fig. 3 mentioned above, since the position of the liquid crystal panel 150 is elongated into direction of the normal line 8 of the image display liquid crystal panel 170, and for that reason it seems that there is a necessity of enlarging the depth of that apparatus. However, for example, as shown in Fig. 4 attached herewith, a mirror 14 for bending an optical path is positioned on the way of the front group 12 disposed in parallel with the X-axis (i.e., a longitudinal side of the image display liquid crystal panel), and thereby bending an optical axis 9 of the front group 12 (i.e., the optical axis of the projection lenses) into the direction of Z-axis (i.e., into the direction parallel with the normal line 8 of the image display liquid crystal panel), so as to prevent the depth thereof from being increased. Of course, the present invention should not be limited to this, and the mirror for bending the optical path may be also disposed between the freely curved surface mirror 4 and the rear group of the projection lenses 2, or between the front group 12 and the rear group 13 of the projection lenses 2.

Further, in the present embodiment, as is shown in Fig. 3, the liquid crystal panel 150 is disposed, with locating the center of the display screen thereof on the optical axis 9 of the projection lenses 2. Accordingly, the screen central light beam 21 emitting from the center of the display screen of the liquid crystal panel 150, passing through an incident pupil of the projection lenses 2, and directing to the screen center of the image display liquid crystal panel 170, propagates along with the optical path of the projection lenses. This screen central light beam 21, after being reflected at a point P2 upon the reflection surface of the freely curved surface mirror 4, is reflected at a point P5 on the plane reflection mirror 5, and it is incident at a point P8 upon the incident surface of the image display liquid crystal panel 170, by a predetermined angle ($\theta$s) with respect to the normal line 8 of the incident surface of that image display liquid crystal panel, i.e., it is incident thereon obliquely.

This means that the light beam passing through, along with the optical axis 9 of the projection lenses 2, is incident, obliquely, with respect to the image display liquid crystal panel 170, and also means that the optical axis of the projection lenses 2 is substantially provided inclining to the image display liquid crystal panel 170. When making the light incident upon the image display liquid crystal panel, in this manner, then there are generated various kinds of aberrations, not being rotationally symmetric to the optical axis, other than the so-called trapezoidal distortion, i.e., bringing the rectangular shape projected into the trapezoidal one. Then, according to the present embodiment, those are compensated by means of the rear group 13 of the projection lenses 2 and also the reflection surface of the freely curved surface mirror 4.

Within the cross-section shown in Fig. 3 mentioned above, the light beam being emitted, passing through the center of the incident pupil of the projection lenses 2, from a lower end of the screen of the liquid crystal panel 150, and being incident at a point P9 upon an upper end of the screen of the image display liquid crystal panel 170, corresponding to this, it is assumed to be a light beam 22. Also, the light beam being emitted, passing through the center of the incident pupil of the projection lenses 2, from an upper end of the screen of the liquid crystal panel 150, and being incident at a point P7 upon a lower end on the screen of the image display liquid crystal panel 170, corresponding to this, it is assumed to be a light beam 23. When seeing this Fig. 3, an optical path length starting from the point P3 via the point P6 and reaching to the point P9 is longer the optical path length starting from the point P1 via the point P4 and reaching to the point P7. This means that the image point P9 on the image display liquid crystal panel 170 is far from the image point P7, seeing them from the projection lenses 2. Then, if an object point corresponding to an image point on the image display liquid crystal panel 170 (i.e., a point on the display screen of the liquid crystal panel 150) is at a point nearer to the projection lenses 2, and also if an object point corresponding to the image point P7 is at the position farther from the projection lenses 2, it is possible to compensate the inclination of the image surface. For that purpose, a normal-line vector at the center of the display screen on the liquid crystal panel 150 is inclined with respect to the optical axis of the projection lenses 2. In more details, it is enough to incline the normal-line vector mentioned above into the direction where the image display liquid crystal panel 170 is located, within the YZ plane. The method is already known for inclining the object plane in order to obtain the object plane inclining with respect to the optical axis. However, with the practical angle of field, since the image surface upon inclination of the object plane generates deformation asymmetric with respect to the optical axis, and it is difficult to compensate it, by means of the projection lenses, being rotationally symmetric. Then, according to the present embodiment, the asymmetric deformation on the image surface is dealt with, by using the freely curved surface, being rotationally asymmetric, i.e., being rotationally asymmetric. For this reason, it is possible to reduce a low dimension distortion on the image surface, greatly, by inclining the object surface, and this is effective for assisting the compensation of aberrations. However, in this Fig. 3 is provided the plane reflection mirror 5, inclining to the vertical direction, but it may be provided in the vertical direction, as is shown in Fig. 1 mentioned above.

Next, explanation will be given on a function of each of optical elements, within the enlarged projection device 10 mentioned above.

In the projection lenses 2, the front group 12 is made of the main lenses, for projecting the modulated light image on the display screen of the liquid crystal panel 150 onto the image display liquid crystal panel 170, and it compensates the fundamental or basic aberrations on the rotationally symmetric optic system. The rear group 13 of the projection lenses 2 includes the freely curved surface lens, being rotationally asymmetric. Herein, as is apparent from Figs. 3, 4 and 5 (a) and 5(b), the freely curved surface lens is curved, directing the concave portion thereof into the direction of emission of the light. And, curvature of the freely curved surface lens, in particular, of a portion where the light beam 23 passes through directing to the lower end of the image display liquid crystal panel 170, is larger than that of a portion where the light beam 22 passes through directing to the upper end of the image display liquid crystal panel 170.

The freely curved surface mirror 4 has a reflection surface of freely curved surface configuration, being rotationally asymmetric. Herein, the freely curved surface mirror 4 is made from a convex surface mirror, being rotationally asymmetric, where a portion thereof is curved, so as to direct the convex with respect to the direction of light reflection thereon. In more details, the curvature of a portion (P1) for reflecting the light directing below onto the image display liquid crystal panel 170 is larger than that of a portion (P3) for reflecting the light directing upper onto the image display liquid crystal panel 170. In other words, on the YZ cross-section of the freely curved surface mirror 4 (i.e., on the cross-section in the direction vertical to the screen of the image display liquid crystal panel 170), the size between P1 and P2 and the size between P3 to P2 are made different from, with respect to the position P2 where the screen center light beam 21 is reflected upon, so that the following equation can be established:

$$\texttt{(size between P1 and P2) < (size between P3 to P2)}$$

$$\texttt{.........(Eq. 2)}$$

And, it is also possible the portion (P1) for reflecting the light directing below onto the image display liquid crystal panel 170 has a configuration, being convex into the direction of reflection of that light, while the portion (P3) for reflecting the light directing upper onto the image display liquid crystal panel 170 has a configuration, being concave into the direction of reflection of that light.

With the constructions mentioned above, the aberration generated due to the oblique incidence is compensated, mainly, with the functions of the freely curved surface lens and the freely curved surface mirror, which are mentioned above. Thus, according to the present embodiment, the freely curved surface mirror 4 mainly compensates the trapezoidal distortion, and the rear group of the projection lenses 2 mainly compensates the asymmetric aberration, such as, the distortion on the image surface, etc.

In this manner, according to the present embodiment, the projection lenses include therein, at least one (1) piece of the freely curved surface lens, being rotationally asymmetric, and the freely curved surface mirror 4 defines the reflection mirror of freely curved surface configuration, being rotationally asymmetric. This enables to compensate both the trapezoidal distortion and the aberration, which are generated due to the oblique projection.

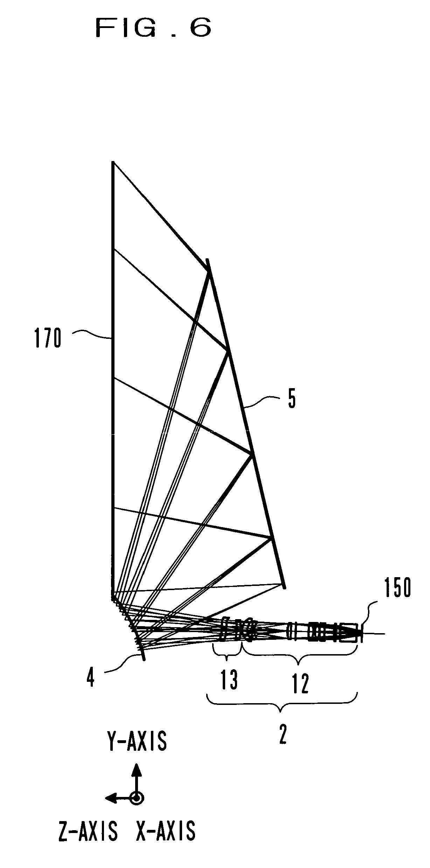

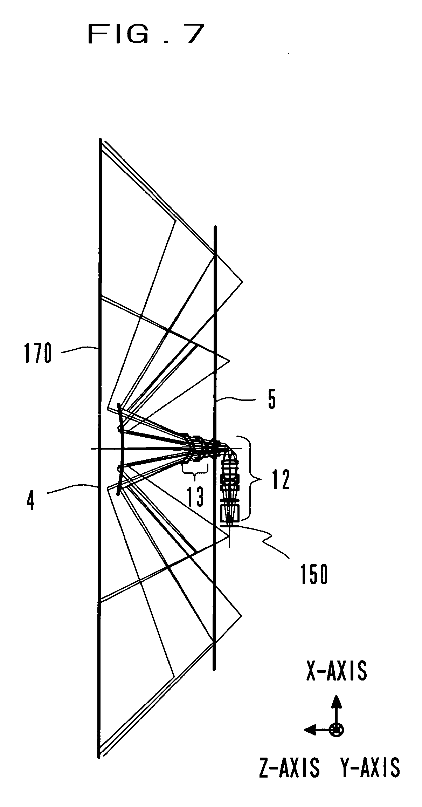

Next, explanation will be made on the optic system of the projection device, which was mentioned above, by referring to Figs. 6 and 7 and Tables 1 to 4, as well, as showing the detailed numerical values thereof.

Figs. 6 and 7 show the diagram of light beams of the optic system of the projection device, according to the present embodiment, upon the numerical examples thereof. In the orthogonal XYZ coordinate systems mentioned above, Fig. 6 shows the structures thereof on the YZ cross-section, and Fig. 7 those on the XZ cross-section. Within the projection lenses 2, the optical path-bending mirror 14 is disposed on the way of the front group 12, as was mentioned in Fig. 4, but in this Fig. 6 is omitted this optical path-bending mirror 14 from being shown therein, and the optic system is extended in the direction of Z-axis. This is also same in this Fig. 5. The optical path-bending mirror has a little voluntariness in the position and/or the angle in setting thereof, and it gives no ill influence upon the function of each optical element. Therefore, explanation will be made, while omitting that of the optical path-bending mirror, in the explanation that will be given below.

The light emitting from the liquid crystal panel 150 shown below in Fig. 6 passes through, firstly the front group 12 that is constructed with only the lenses having the rotationally symmetric configuration, among the projection lenses 2 including the plural number of lenses therein. And, it passes through the rear group 13 including the freely curved surface lens therein, and is reflected upon the reflection surface of the freely curved surface mirror 4. The reflection light thereupon, after being reflected upon the plane reflection mirror 5, is incident upon the image display liquid crystal panel 170.

Herein, the front group 12 is built up with the plural number of lenses, all of which have a refracting surface of rotationally symmetric configuration, and four (4) of the refracting surfaces of those lenses have aspheric surfaces, each being rotationally symmetric, and others have the spherical surfaces. The aspheric surface being rotationally symmetric, which is used therein, can be expressed by the following equation (Eq. 3), with using a local cylindrical coordinates system for each surface:

$$Z = \frac{cr^2}{1+\sqrt{1-(1+k)c^2r^2}} + A\cdot r^4 + B\cdot r^6 + C\cdot r^8 + D\cdot r^{10} + E\cdot r^{12} + F\cdot r^{14} + G\cdot r^{16} + H\cdot r^{18} + J\cdot r^{20}$$

$$\ldots\ldots\ldots(\mathrm{Eq}.\ 3)$$

Where, "r" is the distance from an optic axis, and "Z" represents an amount of sag. Also, "c" is the curvature at an apex, "k" a conical constant, "A" to "J" coefficients of a term of power of "r".

The free curved surfaces in the rear group 13 of the projection lenses 2 can be expressed by the following equation (Eq. 4), including polynomials of X and Y, with applying the local coordinates system (x, y, z) assuming the apex on each surface to be the origin.

$$Z = \frac{cr^2}{1+\sqrt{1-(1+k)c^2r^2}} + \sum_m \cdot \sum_n (C(m,n)\cdot x^m \cdot y^n)$$

$$\ldots\ldots\ldots(\mathrm{Eq}.\ 4)$$

Where, "Z" represents an amount of sag of the free curved surface configuration, in particular, into the direction perpendicular to X- and Y-axes, "c" the curvature at the apex, "r" the distance from the origin within a plane of X- and Y-axes, "k" the conical constant, and C(m,n) the coefficients of the polynomials.

The Table 1 below shows the numerical data of the optic system, according to the embodiment 1.

Table 1

| Surface | Rd | TH | nd | vd |
|---|---|---|---|---|
| S0 | Infinity | 10.00 | | |
| S1 | Infinity | 31.34 | 1.51827 | 48.0 |
| S2 | Infinity | 7.06 | | |
| S3 | 246.358 | 4.65 | 1.85306 | 17.2 |
| S4 | -84.858 | 18.00 | | |
| S5* | -83.708 | 9.00 | 1.49245 | 42.9 |
| S6* | -75.314 | 0.10 | | |
| S7 | 41.651 | 9.32 | 1.49811 | 60.9 |
| S8 | -42.282 | 2.50 | 1.76014 | 20.0 |
| S9 | 29.550 | 0.10 | | |
| S10 | 29.476 | 9.00 | 1.49811 | 60.9 |
| S11 | -79.153 | 25.90 | | |

(continued)

| Surface | Rd | TH | nd | vd |
|---------|-----|------|--------|------|
| S12 | Infinity | 9.10 | | |
| S13 | -265.353 | 6.00 | 1.85306 | 17.2 |
| S14 | -53.869 | 65.00 | | |
| S15 | -24.898 | 4.19 | 1.74702 | 33.2 |
| S16 | -58.225 | 9.00 | | |
| S17* | -27.332 | 10.00 | 1.49245 | 42.9 |
| S18* | -32.424 | 2.50 | | |
| S19# | Infinity | 8.00 | 1.49245 | 42.9 |
| S20# | Infinity | 20.51 | | |
| S21# | Infinity | 8.00 | 1.49245 | 42.9 |
| S22# | Infinity | 160.99 | | |
| S23# | Infinity | -400.00 | REFL | |
| S24 | Infinity | 305.00 | REFL | |
| S25 | Infinity | --- | | |

In the Table 1, S0 to S23 correspond to the marks S0 to S23 shown in Figs. 5 (a) and 5 (b) mentioned above, respectively. Herein, the mark S0 shows the display surface of the image display element 150, i.e., the object surface, and S23 the reflection surface of the freely curved surface mirror 4. Also, though not shown in Figs. 5(a) and 5(b), but a mark S24 shows an incident surface of the image display liquid crystal panel 170, i.e., the image surface. However, in those Figs. 5(a) and 5(b) mentioned above, an upper view shows the YZ cross-section of the projection lenses 2 and the freely curved surface mirror 4, according to the present embodiment, and a lower view the XZ cross-section of that optic system.

Also, in this Table 1, "Rd" is the radius of curvature for each surface, and it is presented by a positive value in case when having a center of curvature on the left-hand side of the surface in Figs. 5(a) and 5(b), while by a negative value in case when having it on the right-hand side, contrary to the above. Also, "TH" is the distance between the surfaces, i.e., presenting the distance from the apex of the lens surface to the apex of the next lens surface. The distance between the surfaces is presented by a positive value in case when the next lens surface is at the left-hand side, in Figs. 5 (a) and 5(b), while by a negative value in case when it is at the right-hand side, with respect to that lens surface. Further, in the Table 1, S5, S6, S17 and S18 are aspheric surfaces, being rotationally symmetric, and also in this Table 1, they are attached with "*" beside the surface numbers for easy understanding thereof.

The coefficients of the aspheric surface of those four (4) surfaces are shown in the Table 2 given below.

Table 2

| Surface | Aspheric Surface Coefficients | | | | | | | |
|---------|---|-------------|---|-------------|---|--------------|---|-------------|
| S5 | K | -11.7678542 | C | -1.159E-11 | F | 2.298642E-20 | J | -1.255E-26 |
| | A | -2.7881E-06 | D | -3.2834E-14 | G | 1.05201E-21 | | |
| | B | 9.67791E-09 | E | 1.09359E-16 | H | 1.96001E-24 | | |
| S6 | K | -5.4064901 | C | 2.0324E-12 | F | 3.0211E-19 | J | -1.4982E-26 |
| | A | 6.14967E-07 | D | -2.2078E-14 | G | 4.30049E-22 | | |
| | B | 4.60362E-09 | E | -8.0538E-17 | H | 4.79618E-24 | | |
| S17 | K | 1.106429122 | C | -9.0262E-11 | F | -1.0521E-18 | J | -6.0837E-26 |
| | A | -1.1068E-05 | D | -1.3984E-13 | G | -8.1239E-23 | | |
| | B | 7.21301E-08 | E | 3.1153E-16 | H | 3.86174E-23 | | |

(continued)

| Surface | Aspheric Surface Coefficients | | | | | | | |
|---|---|---|---|---|---|---|---|---|
| | K | 0.742867686 | C | -2.2719E-11 | F | 1.09398E-19 | J | 9.02232E-29 |
| S18 | A | 1.51788E-07 | D | -4.6853E-14 | G | 1.62146E-22 | | |
| | B | 2.10472E-08 | E | 2.9666E-17 | H | -3.0801E-25 | | |

Also, in the table 1 mentioned above, S19 to S22 in the Table 1 are the refraction surfaces, each having the free curved surface configuration, which builds up the rear lens group of the lens optic system mentioned above, and S23 is the reflection surface having the free curved surface configuration S23 of the reflection optic system, wherein they are shown by attaching "#" beside the surface numbers thereof.

Values of the coefficients for presenting the configurations of those five (5) free curved surfaces are shown in the Table 3.

Table 3

| Surface | Aspheric Surface Coefficients | | | | | | | |
|---|---|---|---|---|---|---|---|---|
| | | | C17 | 5.38933E-07 | C34 | -1.2381E-09 | C51 | -7.4126E-14 |
| | K | 0 | C19 | 8.33432E-07 | C36 | 1.13944E-09 | C53 | 2.05074E-12 |
| | C4 | 0.013500584 | C21 | -4.6367E-08 | C37 | 3.87771E-12 | C55 | -9.2166E-13 |
| | C6 | 0.003493312 | C22 | -6.2643E-09 | C39 | 1.04779E-11 | C56 | -2.5867E-15 |
| S19 | C8 | -0.00083921 | C24 | -2.2449E-08 | C41 | 1.80038E-11 | C58 | -8.7122E-15 |
| | C10 | -0.00032098 | C26 | -5.6706E-08 | C43 | 5.23019E-11 | C60 | 2.85321E-14 |
| | C11 | 8.59459E-06 | C28 | 9.69952E-10 | C45 | 1.69253E-11 | C62 | -8.5084E-14 |
| | C13 | 2.14814E-06 | C30 | -1.1968E-10 | C47 | -2.7E-14 | C64 | 1.25198E-13 |
| | C15 | 7.54355E-06 | C32 | -1.3638E-09 | C49 | 7.30978E-13 | C66 | -5.6277E-14 |
| | | | C17 | 7.49262E-07 | C34 | -5.7462E-10 | C51 | -3.6141E-13 |
| | K | 0 | C19 | 1.19039E-06 | C36 | 1.27396E-09 | C53 | 8.54188E-14 |
| | C4 | 0.015488689 | C21 | -1.2953E-07 | C37 | -4.7746E-12 | C55 | -5.3469E-13 |
| | C6 | 0.006553414 | C22 | 5.115E-10 | C39 | 7.32855E-12 | C56 | 8.92545E-17 |
| S20 | C8 | -0.00116756 | C24 | -2.1936E-08 | C41 | 5.30157E-11 | C58 | -5.3434E-15 |
| | C10 | -0.00033579 | C26 | -5.9543E-08 | C43 | 5.05014E-11 | C60 | 1.96533E-14 |
| | C11 | 7.5015E-06 | C28 | 2.03972E-08 | C45 | -2.1894E-11 | C62 | -1.3923E-13 |
| | C13 | -2.5728E-06 | C30 | 1.16701E-11 | C47 | -1.2515E-13 | C64 | 1.06322E-13 |
| | C15 | -1.3543E-06 | C32 | -1.6198E-09 | C49 | 7.64489E-13 | C66 | -4.6602E-15 |
| | | | C17 | -1.0379E-07 | C34 | 2.81743E-10 | C51 | -8.1775E-15 |
| | K | 0 | C19 | 3.0082E-08 | C36 | 6.05663E-10 | C53 | 3.06022E-14 |
| | C4 | 0.015096874 | C21 | 7.95521E-08 | C37 | 8.39381E-13 | C55 | -9.1775E-13 |
| | C6 | 0.009982808 | C22 | -1.3911E-09 | C39 | 1.98531E-12 | C56 | -7.8543E-17 |
| S21 | C8 | 0.000358347 | C24 | 9.33292E-10 | C41 | 1.37477E-11 | C58 | -8.9588E-16 |
| | C10 | 0.000209267 | C26 | 3.54468E-09 | C43 | -1.0671E-11 | C60 | -6.0768E-15 |
| | C11 | -3.8593E-07 | C28 | 4.1615E-09 | C45 | 9.04109E-12 | C62 | -1.9528E-14 |
| | C13 | -6.8336E-06 | C30 | -1.2331E-11 | C47 | 2.48401E-14 | C64 | 2.6781E-14 |
| | C15 | -2.2455E-05 | C32 | -2.3367E-10 | C49 | 6.92603E-14 | C66 | -1.4324E-14 |

(continued)

| Surface | Aspheric Surface Coefficients | | | | | | |
|---|---|---|---|---|---|---|---|
| | | | C17 | -3.6973E-07 | C34 | 4.8045E-10 | C51 | -2.9795E-13 |
| | K | 0 | C19 | -3.0682E-07 | C36 | 1.43328E-10 | C53 | -2.5306E-14 |
| | C4 | 0.022813527 | C21 | 4.12093E-08 | C37 | -2.0707E-12 | C55 | -3.9401E-13 |
| | C6 | 0.012060543 | C22 | 4.07969E-09 | C39 | -4.9221E-12 | C56 | 6.88651E-16 |
| S22 | C8 | 0.000638931 | C24 | 8.5986E-09 | C41 | -2.3681E-12 | C58 | 1.55006E-15 |
| | C10 | 0.000196027 | C26 | 2.1713E-08 | C43 | -2.1567E-11 | C60 | -1.4674E-15 |
| | C11 | -7.1204E-06 | C28 | 1.63499E-08 | C45 | -2.3679E-12 | C62 | -9.9822E-15 |
| | C13 | -1.269E-05 | C30 | 1.38704E-10 | C47 | -5.7167E-15 | C64 | 2.72925E-14 |
| | C15 | -2.5184E-05 | C32 | 2.02372E-10 | C49 | -9.0337E-14 | C66 | -1.1966E-14 |
| | | | C17 | -1.1083E-09 | C34 | -4.9118E-14 | C51 | -5.4918E-19 |
| | K | 0 | C19 | -5.7768E-10 | C36 | 8.12546E-14 | C53 | -2.2569E-18 |
| | C4 | 0.001597194 | C21 | 1.60076E-10 | C37 | -7.486E-17 | C55 | -3.5657E-18 |
| | C6 | 0.001324181 | C22 | 1.91534E-12 | C39 | 6.80626E-16 | C56 | 1.09883E-21 |
| S23 | C8 | 1.37885E-05 | C24 | -1.0665E-11 | C41 | -5.1295E-17 | C58 | -2.1535E-20 |
| | C10 | 1.34349E-05 | C26 | -8.6063E-12 | C43 | -3.6526E-16 | C60 | 2.01763E-20 |
| | C11 | -4.8064E-08 | C28 | -1.1125E-12 | C45 | 1.46399E-15 | C62 | -1.2016E-20 |
| | C13 | 5.24071E-08 | C30 | 6.24714E-14 | C47 | -2.1563E-18 | C64 | 3.21408E-21 |
| | C15 | 9.53861E-08 | C32 | -3.4381E-14 | C49 | 2.86073E-18 | C66 | -1.4922E-19 |

According to the present embodiment, the object surface, i. e. , the display screen of the image display element 11 is inclined by -1.163 degrees to the optical axis of the projection lenses 2. It is assumed that, the direction of inclination is presented by a positive value, into which the normal line on the obj ect surface rotates into the clockwise direction, within the cross-section shown in Fig. 6. Accordingly, according to the present embodiment, it means that, within the cross-section shown in Fig. 6, the object surface is inclined into the anti-clockwise direction by 1.163 degrees from the position, perpendicular to the optical axis of the projection lens 2.

The free curved surface mirror 4 of the mark S23 is so disposed that the origin of that local coordinates locates on the optical axis of the projection lenses 2. And, the normal line at the origin of that local coordinates, i.e., the Z-axis, is disposed, inclining by around +29 degree from the position parallel to the optical axis of the projection lenses 2. The direction of this inclination is assumed to be positive in the anti-clockwise rotating direction, within the cross-sections shown in Fig. 6, and therefore, it is inclined into the anti-clockwise rotation. With this, the screen central light beam, emitting from the screen center of the liquid crystal panel 150 and propagating almost along with the optical axis of the projection lenses 2, after being reflected upon S23, propagates into a direction inclined by 58 degrees, i.e., 2 times large as the inclination angle with respect to the optical axis of the projection lenses 2. Herein, it is assumed that a new optical axis after the reflection directs into the direction passing through S23, i.e., the origin of the coordinates, and inclining 2 times large as the inclination angle with respect to the optical axis of the projection lenses 2, and that the surfaces thereafter are disposed on this optical axis. The value -400 of the distance shown by S23 in the Table 1 indicates that the following S24 lies at the right-hand side of S23 , and the origin of the local coordinates is located at the point of distance 400 mm along the optical axis after the reflection. The surfaces thereafter are also disposed in accordance with the same rules.

The conditions of the inclination and an offsets in the local coordinates are shown in the Table 4.

Table 4

| Surface | ADE(°) | YDE (mm) |
|---|---|---|
| S0 | -1.163 | 0.0 |
| S23 | 29.000 | 0.0 |

(continued)

| Surface | ADE(°) | YDE (mm) |
|---------|--------|----------|
| S24 | -43.000 | 0.0 |
| S25 | 30.000 | 0.0 |

In this Table 4, values of the inclination angle and the offset are shown on the columns on the right-hand sides of the surface number, wherein "ADE" is a magnitude of the inclination within the surface in parallel with the cross-section shown in Fig. 5, and a rule of display thereof is as shown in the above. Also, "YDE" is a magnitude of the offset, and the offset is set up into the direction perpendicular to the optical axis within the surface in parallel with the cross-section of Fig. 5, and the offset below on the cross-section of Fig. 5 is assumed to be positive. However, in the present embodiment, "YDE" is set to be "0" (i.e., no offset).

In the present invention, the inclinations and the offsets of all optical elements are determined in the directions within the cross-section parallel with the cross-section shown in the figure.

From the Tables 1 through 3 mentioned above, according to the present embodiment, it is apparent that the curvature "c" and the conic coefficients "k" are "0". The trapezoidal distortion due to the oblique incidence is generated, extremely large in the direction of the oblique incidence, but the amount thereof is small in the direction perpendicular to this. Accordingly, in the direction of the oblique incidence and the direction perpendicular thereto, there must be provided functions greatly different from each other, and it is possible to compensate or correct the asymmetric aberration, preferably, without using the curvature "c" or the conic coefficient "k", being rotationally symmetric and functioning in all directions.

Further, the numeral values shown in the above Tables 1 to 4 are those in an example of case when projecting the optical image (i.e., the modulated light image, upon which the light modulation is made within the region 16x9 on the screen of the liquid crystal panel 150, enlargedly, up to the size 1452.8x817.2 on the screen of the image display liquid crystal panel 170.

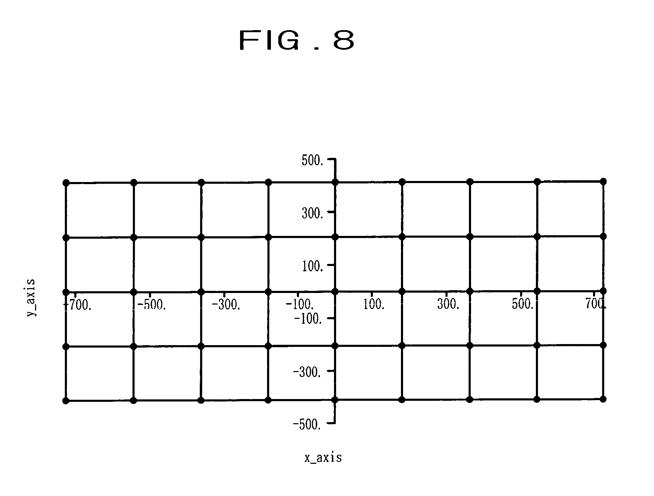

The graphical distortions in this case are shown in Fig. 8 attached herewith. The vertical direction in this Fig. 8 corresponds to the vertical direction shown in Fig. 6, and also corresponds to the direction of Y-axis thereof. The horizontal direction in Fig. 7 corresponds to the direction perpendicular to the Y-axis on the image display liquid crystal panel 170, and the center of an oblong in the figure corresponds to the center of the screen. This figure shows the condition of curvature of each of straight lines, in particular, when displaying the screen while dividing it into four (4) in the vertical direction and eight (8) in the horizontal direction, thereby to show the state or condition of graphic distortion.

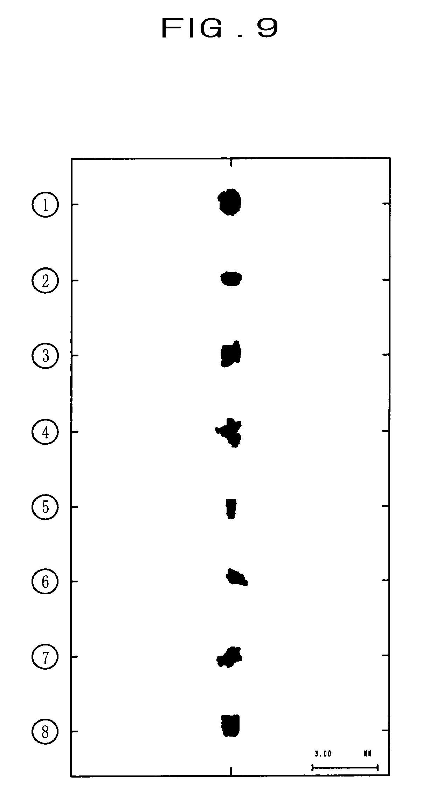

Spot diagrams of the present numeric value embodiment are shown in Fig. 9. In this Fig. 9 are shown the spot diagrams of the light fluxes, emitting from eight (8) points on the display screen of the liquid crystal panel 150; i.e. , (8, 4.5), (0, 4.5), (4.8, 2.7), (8, 0), (0, 0), (4.8, -2.7), (8, -4.5) and (0, -4.5) with the values of the X and Y coordinates, in the sequential order from the top (i.e., (1) to (8)). However, the unit thereof is "mm". The horizontal direction of each spot diagram corresponds to the X direction on the screen, while the vertical direction the Y direction on the screen. Both show that they maintain preferable performances.

In the above, mentioning is made in details of one example of the projection device. Further in the above example, the light beam emitting from the projection lenses 2 is reflected upon the freely curved surface 4 and further upon the plane reflection mirror 5 to be turned back to the image display liquid crystal panel 170, in the structured thereof, but the present invention should not be restricted only to this, and it is needless to say that the plane reflection mirror for returning mentioned above may be omitted, depending upon the position of disposing the projection lenses.

<Fresnel Lens Sheet>

Next, explanation will be made on one embodiment of the Fresnel lens sheet 160, functioning as the light direction conversion unit.

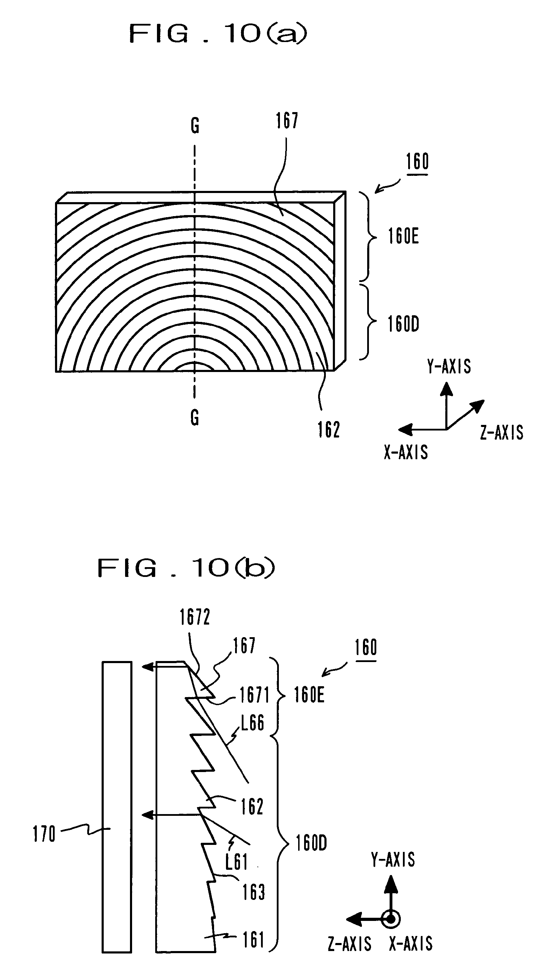

Figs. 10 (a) and 10 (b) are views for showing the structures of the Fresnel lens sheet, diagrammatically, and in particular, Fig. 10 (a) shows the perspective view when seeing the Fresnel lens sheet from the side of the projection device, and Fig. 10 (b) the cross-section structure view thereof, cutting along a G-G line.

As shown in Figs. 10(a) and 10(b), the Fresnel lens sheet 160 is constructed with a refraction region 160D, being located approximately corresponding to be the central side on the screen of the image display liquid crystal panel 170, and a total reflection region 160E, being located corresponding to the periphery side of the image display liquid crystal panel 170 and disposed so as to surround that refraction region 160D. Within the refraction region 160D are formed a plural number of refraction type Fresnel lenses 162, concentrically, upon the surface of a material 161 on the opposite side to that of the image display liquid crystal panel 170. Each of the Fresnel lenses 162 has a function of refracting the light beam L61, being projected from the projection device 10 and incident upon at an angle equal or less than a predetermined value thereof, thereby to be emitted onto the image display liquid crystal panel 170, vertically. Also, within the total reflection region 160E are formed a plural number of total reflection type Fresnel lenses, concentrically, upon the surface of the material 161 on the opposite side to that of the image display liquid crystal panel 170. Each of the total reflection Fresnel lenses 167 has a function for totally reflecting the light beam L66, being projected from the projection device 10 at the incident angle greater than the predetermined value, thereby to be emitted onto the image display liquid crystal panel 170, vertically.

As is well known, if constructing the Fresnel lens sheet from the refraction type Fresnel lenses, since the incident angle incident upon the Fresnel lens sheet (i.e., the angle defined between the normal line) comes to be large, as well as, since reflection can be easily generated upon the incident surface of the Fresnel lens, then the reflection loss increases, greatly, and therefore, it is dark on the peripheral portion of the screen. Then, according to the present embodiment, applying the technology shown in WO 2004/049059 therein, on the peripheral portion of the image display liquid crystal panel 170 are disposed the total reflection type prism, within a region where the incident angle from the projection device 10 is equal or greater than a predetermined value.

First of all, explanation will be given below, about the refraction type Fresnel lens 162 within the refraction region 160D. With connecting the prism surface 163 of each of the refraction type Fresnel lenses, on an arbitrary cross-section of the refraction regions 160D of the Fresnel lens 160, it is possible to obtain one (1) piece of a curved line (i.e., an envelope line). Assembling all the obtained envelope lines on the cross-section thereof defines one (1) piece of an imaginary surface. Hereinafter, this imaginary surface is called an "original surface".

The original surface accompanying with the refraction type Fresnel lenses constructing the refraction region 160D is a spherical surface, in general, within the projection type image display apparatus, however, according to the present embodiment, it has an aspheric surface configuration corresponding to the incident angle of the light beam, which is incident from the projection device 10 upon the image display liquid crystal panel 170, i . e . , applying the technology of the Fresnel lenses disclosed in Japanese Patent Laying-Open No. 2006-154719 (2006) therein.

In this instance, Fresnel angle in an upper portion is larger than that in a lower portion, on each prism surface, within the refraction region 160D. With this, the light beam incident upon the incident surface within the refraction region 160D of the Fresnel lens sheet 160 is converted so as to be incident upon the incident surface of the image display liquid crystal panel 170, almost perpendicular thereto, covering all over the surfaces of the image display liquid crystal panel 170.

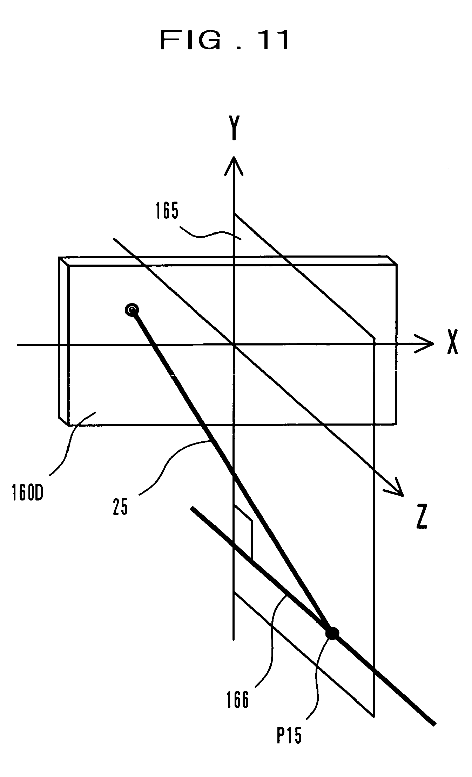

Next, explanation will be made on the details of the method for determining the surface configuration of the plural number of prism surfaces 163 (i.e., the original surfaces of the Fresnel lenses), which is formed concentrically, on the refraction type Fresnel lenses 162 to be built up within the refraction region 160D mentioned above, by referring to the diagrammatic view shown in Fig. 11. However, as was mentioned above, the prism surfaces of the refraction type Fresnel lenses building up the refraction region 160D are formed, concentrically, surrounding a certain one (1) point (i.e., a rotation axis). And, the original surface for determining the Fresnel angle of the prism surface for each of the refraction type Fresnel lenses (i.e., an angle defined between the prism surface and a main plane surface of the Fresnel lens sheet 160) has an aspheric configuration. Herein, as was mentioned above, the original surface is that for determining the Fresnel angle for each prism surface, and it indicates that lens surface obtained when building up an entire of the refraction region 160D of the Fresnel lens sheet 160, as one (1) piece of lens. Thus, when determining the Fresnel angle of the prism surface for the refraction type Fresnel lenses, firstly it is assumed that the entire of the refraction regions 160D on the Fresnel lens sheet 160 has a certain lens characteristic, and the surface configuration of that lens is determined to be the original surface. And, the configuration, corresponding to each point of the refraction region 160D on that original surface (for example, a tangential line on the original surface at each point corresponding thereto), is extended onto the surface of the refraction region 160D. Withthis, the Fresnel angle of the prism surface is determined at each point of the refraction region 160D. Accordingly, a curve obtained by connecting each prism surface depending on that Fresnel angle, within the entire of the refraction region 160D, i.e., an envelope including an aggregate of all prism surfaces within the entire of the refraction region 160D of the Fresnel lens sheet presents the original surface mentioned above. Thus, the direction of refracted light on the prism surface at each point of the refraction region 160D is determined depending upon the configuration of the original surface mentioned above, corresponding to each prism thereof. Further, the rotation axis mentioned above is assumed to be orthogonal to the main plane (the XY plane in Fig. 11) of the Fresnel lens sheet 160 (i.e., the plane including Z-axis). Also, this rotation axis includes a point P15, at which the light beam 25 incident upon the Fresnel lens sheet 160 intersects the plane 165 (i.e., the plane parallel to the YZ plane) dividing the Fresnel lens sheet 160, vertically, the left and the right, equally. Thus, the rotation axis is an axis, being perpendicular to the main plane of the Fresnel lens sheet 160 (i.e., being in parallel to the normal line 8 of the image display liquid crystal panel 170; thus, an axis 166 shown in Fig. 11.

However, in the above-mentioned, because the incident light beam 25 changes the incident angle (i.e., the angle to the normal line of the incident surface) depending on the position on the image display liquid crystal panel 170, therefore herein, there must be also a plural number of axes 166, which can be obtained from the above-mentioned. However, among of those plural number of axes, the axis at the almost center thereof is assumed to be the rotation axis of the refraction type Fresnel lens (i.e., the central position of the concentric-like prism building up the refraction type Fresnel lens).

Following to the above, the configuration (i.e., the angle) of the Fresnel angle is obtained, for each of the prism surfaces, as follows.

First of all, there is obtained an angle of the prism, for emitting the light incident upon the image display liquid crystal panel 170 into the direction of the normal line mentioned above (i.e., 0 degree in an emission angle), while refracting it on the prism surface of the refraction region 160D, in accordance with the Snell's law, for each of the points on the refraction region 160D. Next, the original surface (aspheric surface) of the refraction type Fresnel lenses is made up with continuing the prism surfaces obtained.

However, this original surface obtained can be approximated by the equation of aspheric surface of the following (Eq. 5):

$$Z = \frac{cr^2}{1 + \sqrt{1 - (1+k)c^2 r^2}} + A \cdot r^4 + B \cdot r^6 + C \cdot r^8 + D \cdot r^{10} + E \cdot r^{12} + F \cdot r^{14}$$

$$\ldots\ldots (\text{Eq. } 3)$$

Herein, "Z" is an amount of sag, "r" the distance from the optic axis, "c" the curvature at an apex, "k" a conic constant (or, conical constant), "A" to "J" coefficients (the aspheric surface coefficients) of a term of power of "r".

In this instance, further, comparison is made between the aspheric coefficients approximated and an actual emission angle of the light beam, and necessary amendment and/or changing are added, appropriately, upon the position of the rotation axis and/or the aspheric surface coefficients, so as to bring the emission angle into almost 0 degree.

In this manner, portions of the refraction region 160D of the Fresnel lens sheet 160 are conducted with the elements obtained in the above, i.e., positions of the rotation axes, to be the rotation centers of the concentric prism portions building up the refraction type Fresnel lenses, and the aspheric coefficients of the original surface, which is formed by the aggregate of the respective prism surfaces.

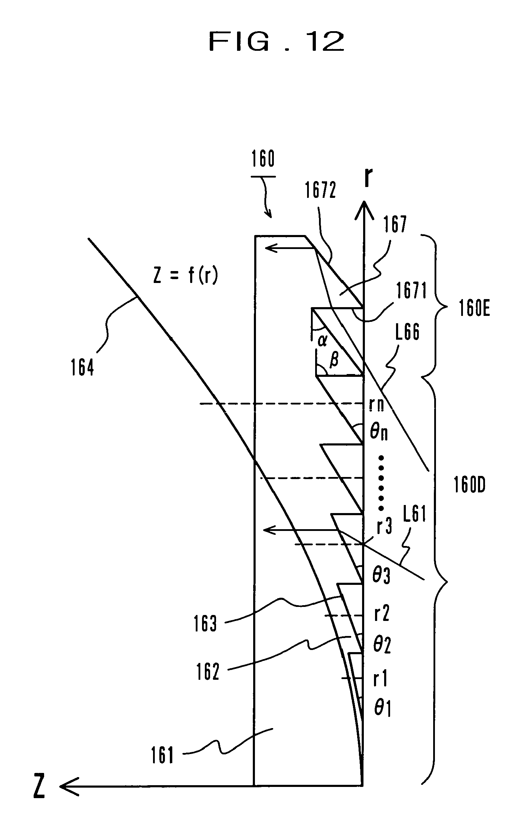

Fig. 12 shows the diagrammatic cross-section of the Fresnel lens sheet 160, which is made up through the processes mentioned above. This Fig. 12 shows the cross-section view of the Fresnel lens sheet 160 cutting along a plane, being parallel to the normal line of that Fresnel lens sheet 160 and including the rotation axis mentioned above.

In this Fig. 12, Z=f(r) is a polynomial expression for expressing the original surface of aspheric surface configuration accompanying with the refraction type Fresnel lenses, within the refraction region 160D of the Fresnel lens sheet 160, and it can be expressed by the equation (Eq. 5). Herein, "r" corresponds to "r" in (Eq. 5) mentioned above, and presents the distance from the rotation axis. The Fresnel angle "θ1" of the prism surface 163 of the reflection type Fresnel lenses at the distance "r1" (i.e., the angle defined between the main plane of the Fresnel lens sheet 160 and the prism surface) is nearly equal to an inclination (i.e., a tangent) of the original surface 164 at the distance "r1". Thus, assuming that the aspheric surface equation of the original surface expressed by the (Eq. 5) is Z=f(rn), and that "n" is an integer equal or greater than "1", then the Fresnel angle "θn" at each position on the refraction region 160D can be expressed by the following (Eq. 6)

$$\theta n = f(rn)'$$

Therefore, the following can be obtained, i.e., θ1=f(r1)', θ2=f(r2)', θ3=f(r3)'.... In this manner the Fresnel angle "θn" at each position of the refraction region 160D almost corresponds to a differential value at each position of the aspheric surface equation (i.e., each distance "rn"). In this manner, the Fresnel angle "θn" is determined at each position of the refraction region 160D within the Fresnel lens sheet 160.

As was mentioned above, the light beam incident from the projection device 10 upon the refraction region 160D of the Fresnel lens sheet 160 is refracted upon each prism surface 163 of the refraction type Fresnel lenses. As was mentioned above, if bringing the original surface 164 of the refraction type Fresnel lens into the aspheric surface configuration depending on the incident angle of the incident light beam upon each position of the refraction region 160D, then each light beam refracted upon each prism surface 163 is almost parallel to the normal line of the Fresnel lens sheet 160. Herein, as is apparent from Fig. 12, the Fresnel angle "θ" of the prism surface 163, locating at an upper potion of the refraction region 160D of the Fresnel lens sheet 160 (i.e., at a position on the image display liquid crystal panel, being in an upper portion in the vertical direction and being far from the rotation axis) is determined to be larger than the Fresnel angle "θ" of the prism surface 163, locating at a lower potion of the refraction region 160D of the Fresnel lens sheet 160 (i.e., at a position on the image display liquid crystal panel, being in a lower portion in the vertical direction and being near to the rotation axis). This is because, in the oblique projection according to the present embodiment, the incident angle of the light beam is larger, in the upper portion of the image display liquid crystal panel, than that in the lower portion of the image display liquid crystal panel.

Next, explanation will be given on the total reflection type Fresnel lenses 167 within the total reflection region 160E, by referring to Fig. 12 mentioned above. As is shown in Fig. 12, each of the total reflection type Fresnel lenses within the total reflection region 160E includes a refraction surface 1671 and a total reflection surface 1672. The light beam L66 incident upon the total reflection type Fresnel lens 167 is refracted upon the refraction surface 1671 thereof, and directed toward the total reflection surface 1672. And, it is totally reflected upon the total reflection surface 1672, to be emitted from the Fresnel lens sheet 160, and thereby being incident upon the image display liquid crystal panel 170 perpendicular thereto.

For achieving to bring the incident light beam to emit onto the image display liquid crystal panel 170, perpendicularly, an angle "α", defined between the total reflection surface 1672 and themainplane, is so determined that it comes tobe small, gradually, from the total reflection type Fresnel lenses near to the projection device 10 up to the total reflection type Fresnel lenses far from that, and an angle "β", defined between the refraction surface 1671 and the main plane, is so determined, on the contrary thereto, that it comes to be large, gradually, from the total reflection type Fresnel lenses near to the projection device 10 up to the total reflection type Fresnel lenses far from that. In this manner, it is possible to emit the light beam incident upon the total reflection region toward the image display liquid crystal panel 170, perpendicularly.

With such the structures of the Fresnel lens sheet as was mentioned above, it is possible to convert the light beam, being projected from the projection device 10 toward the image display liquid crystal panel 170, into that incident upon the image display liquid crystal panel 170 to have the incident angle of nearly 0 degree, so as to be emitted therefrom. Accordingly, with using the Fresnel lens sheet according to the present embodiment, since the light beam from the projection device 10 is incident upon the image display liquid crystal panel 170 in parallel to the normal line thereof (i.e., perpendicular to the image display liquid crystal panel 170), it is possible to display the image or picture of high contrast upon the image display liquid crystal panel 170.

Further, although the explanation was given that, both the refraction region and the total reflection region are provided on the incidence side of the sheet, with the Fresnel lens sheet mentioned above, however the present should not be restricted only to this. For example, as is described inJapanese Patent Laying-Open No. 2005-91541 (2006), which was filed by the present inventors, it is also possible to provide the total reflection region on the peripheral portion where the incident angle is equal or greater than a predetermined value, on the incidence side of the sheet, while providing the refraction region at a central portion where the incident angle is equal or less than the predetermined value, on the emission side of the sheet.

By the way, with the liquid crystal display apparatus, in particular, the rear projection device (or, unit) 100, in which the liquid crystal panel 170 us illuminated or lightened from the rear thereof (i.e., irradiated with the backlight), since distribution of an amount of lights (or, distribution of light intensity or distribution of luminance) irradiated from the light source 110 upon the liquid crystal panel is not uniform (or, equalized), there is a possibility of generating unevenness in brightness of the image displayed on the image display liquid crystal panel. Then, explanation will be made on an embodiment, asavariationof therearprojectiondevice (or, unit) 100 mentioned above, wherein so-called an integrator is inserted between the light source and the liquid crystal panel, for equalizing the light amount distribution of the illumination light from the light source, below.

<Rear projection Device (or Unit)>

<Embodiment 1>

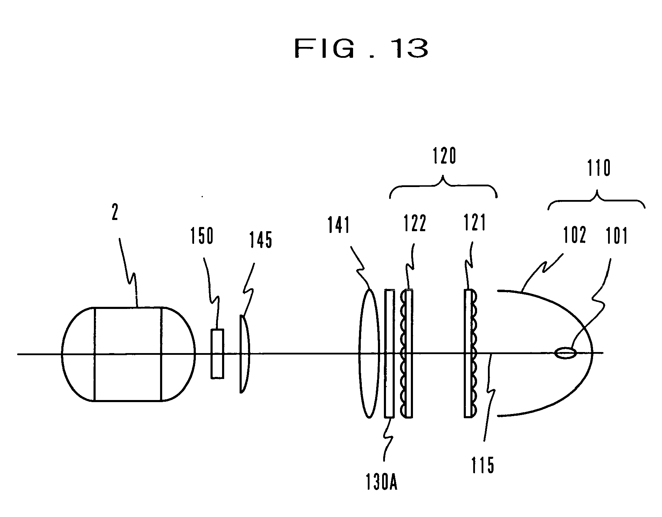

As is shown in Fig. 13 attached herewith, the rear projection device (or, unit) 100, according to this variation, includes a light source 110, a first multi-lens element 121 and a second multi-lens element122,functioning asa multi-lenstypeintegrator 120 in a pair thereof, a polarized light conversion element 130A, a pileup lens 141, a field lens 145, a liquid crystal panel 150, a projection device 10, and a Fresnel lens sheet 160. However, in this Fig. 13, the Fresnel lens sheet 160 (see Fig. 2 mentioned above) is omitted from illustration thereof, as the optic direction conversion device of building up an element of the rear projection device (or, unit).

Further, in Fig. 13, the light source 110 comprises a lamp 101 and a reflector 102. The lamp 101 is a while color lamp, such as, the high-pressure mercury lamp, for example. The reflector 102 has a reflection surface of rotationally parabolic configuration, for example, which is disposes so that it covers the lamp 101 from the rear side thereof, and it has an emission opening having a circular or polygonal shape. And the light emitted from this lamp 101 is reflected upon the reflector 102 having the rotationally parabolic configuration, to be almost parallel to an optical axis 115; i.e., an almost parallel light beam is emitted from the light source 110. The light emitted from the light source 110 is incident upon the integrator of the multi-lens type.

As was mentioned above, the multi-lens type integrator 120 is made up with the first multi-lens element 121 and the second multi-lens element 122. However, the first multi-lens element 121, having a rectangular shape almost similar or analogous to the liquid crystal panel 150 and the image display liquid crystal panel 170 when seeing it into the direction of the optical axis 115 and being made up with a plural number of lens cells arranged in a matrix manner, divides the light incident thereupon from the light source into a plural number of lights through the plural number of the lens cells; i.e., guiding them to pass through the secondmulti-lens element 122 and the polarized light conversion element 130A, effectively. Thus, the first multi-lens element 121 is so designed that it is in an optically conjugated relationship with the lamp 101 and each of the lens elements of the second multi-lens element 122.

In the similar manner to that of the first multi-lens element 121, with the second multi-lens element 122, having a rectangular shape almost similar or analogous to the liquid crystal panel 150 and the image display liquid crystal panel 170 when seeing it into the direction of the optical axis 115 and being made up with a plural number of lens cells arranged in a matrix manner, each of the lens cells buildingupprojects (or, mapping) the configuration of the lens cell of the first multi-lens element 1 corresponding thereto, upon the pileup lens 141 and the liquid crystal panel 150, respectively. And, in this course or process, upon the polarized light conversion element 130A are aligned the lights from the second multi-lens element 122 into a predetermined polarization direction. At the same time, the projection image of each of the lens cells of the first multi-lens element 121 is piled up thereon, respectively, by means of the pileup lens 141. And, the lights from that projection image, after being bent to be in parallel with the optical axis 115 by the function of the field lens 145, is incident upon the liquid crystal panel 150. Thus, that projection image is piled up or overlapped on the liquid crystal panel 150. Thereafter, through the short-range oblique optic system with using the reflection upon the free curved surface mirror therein, the details of which is shown in Figs. 3 to 5(b) mentioned above, the lights are projected as the backlight, in the oblique direction, enlargedly, from the short distance on the rear surface side of the image display liquid crystal panel 170 of the liquid crystal display apparatus.

However, since the second multi-lens element 122 and a condenser lens 141, which is disposed near to this, are so designed that they are optically in the relationship between a subject and an image (i.e., the conjugated relationship), with each of the lens cells of the first multi-lens element 121, then the light beams divided into a plural number thereof through the first multi-lens element 121 are projected upon the liquid crystal panel 150, by means of the second multi-lens element 122 and the pileup lens 141, piling up each other, and thereby brining the light amount distribution upon the liquid crystal panel 150 (further, the image display liquid crystal panel 170) to be uniform.

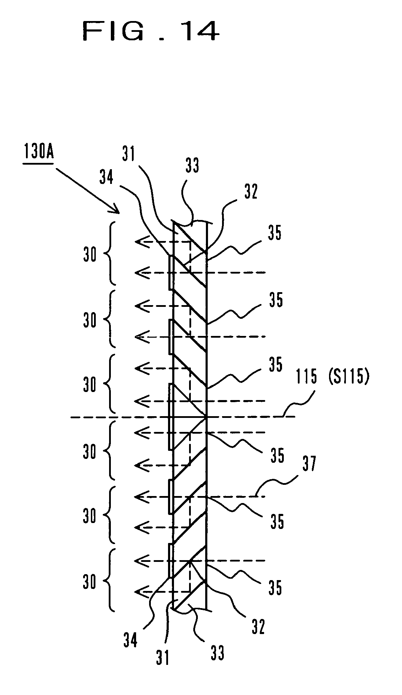

Herein, explanation will be made about the function of polarized light conversion of the polarized light conversion element 130A, by referring to Fig. 14. This Fig. 14 is a view for showing the cross-section structures of the polarized light conversion element, cutting along the longitudinal side of the liquid crystal panel including the optical axis of the polarized light conversion element.

Thus, as is shown in Fig. 14, within the polarized light conversion element 130A, a plural number of translucent materials 31, each being a parallelogram column extending along the direction in parallel with the short side of the liquid crystal panel 150, are arranged in parallel with the longitudinal side of the liquid crystal panel 150, in the manner of an array, in parallel with the surface perpendicular to the direction of the optical axis 115, and on boundary surfaces defined between the translucent materials 31 neighboring to each other, which are disposed in the manner of the array, there are arranged a polarized light beam splitter films (hereinafter, being abbreviated "PBS film") 32 and a reflection film 33, alternately. Also, on the emission surface, from which the light emits, passing through an opening portion 35 on the incidence side of the polarized light conversion element 130A and penetrating through the PBS film 32, there is provided a $\lambda/2$ phase difference plate 34. Also, the polarized light conversion element 130A is constructed to be symmetric with respect to a surface that is defined the optical axis 115 and an extending direction of the translucent material 51 of the parallelogram column (i.e., the plane including the optical axis 115, and conveniently, being called an "optical axis surface", hereinafter).

Upon the polarized light conversion element 130A constructed as was mentioned above, for example, S-polarized light, among the light beam 37 being incident upon the first multi-lens element 121, the second multi-lens element 122 and the opening portion 35, is reflected upon the PBS film 32, and is also reflected upon the reflection mirror 33, thereby being emitted as the S-polarized light therefrom. Also, the light of P-polarized light passes through the PBS film 32, and is converted into the S-polarized light through the $\lambda/2$ phase difference plate 34 provided on the emission surface, thereby being emitted therefrom. With providing suchpolarized light conversion units 30 in a plural number thereof, as a basic element, the polarization direction of the light incidence upon the polarized light conversion element 130A is converted (or aligned) into the light in a predetermined polarization direction (herein, the light of S-polarization), thereby to be emitted therefrom. However, in case when aligning it into the P-polarized light, it is enough to provide, further, the λ/2 phase difference plate 34 on the emission surface of the S-polarized light.

As was mentioned above, it is possible to irradiate the liquid crystal panel 150, with more uniform distribution of the light amount, by applying the multi-lens type integrator 120 therein, which is constructed with a pair of the first multi-lens element 121 and the second multi-lens element 122. Thereafter, the lights are projected, enlargedly, upon the image display liquid crystal panel 170 of the liquid crystal display apparatus from the short distance of the rear surface side thereof, in the oblique direction, thereby obtaining the backlight for the image display liquid crystal panel 170, being more uniform in the light amount distribution thereof.

<Embodiment 2>

However, in the embodiment mentioned above, the explanation was given on the case of applying the multi-lens type integrator 120 therein, which is made from the pair of the first multi-lens element 121 and the secondmulti-lens element 122, as the integrator for uniformizing (or equalizing) the illumination lights. Further, in the place thereof, it is also possible to apply a rod-type integrator, as one kind of the integrators, and hereinafter will be given explanation about the rear projection device (or, unit) 100 in such the case, by referring to Fig. 14.

However, as such the rod-type integrator can be listed up a light funnel or a rod lens, etc., for example, but herein, as an example of that, mentioning is made on one, which applies the light funnel therein. Also herein, as the liquid crystal panel, the reflection-type liquid crystal panel is applied therein. However, the present invention should not be restricted to this, but the rod lens may be applied in the place of the light funnel, and also may be applied a micro mirror or a transmission-type liquid crystal panel in the place of the reflection-type liquid crystal panel.

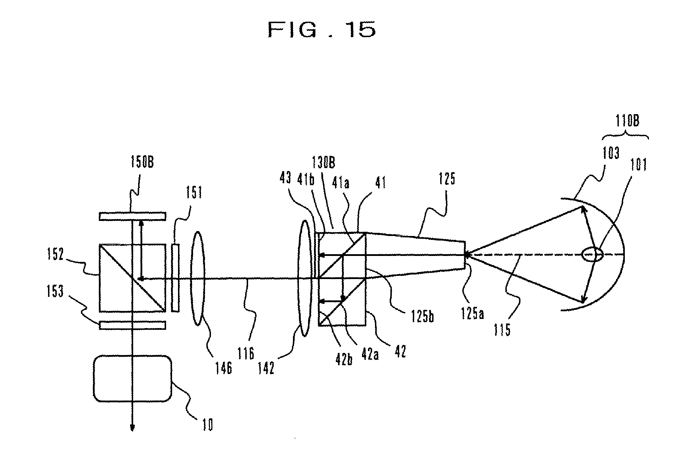

Fig. 15 attached herewith is a view for diagrammatically showing the structures of the rear projection device (or, unit) 100, adopting the rod-type integrator therein, according to further other embodiment. As is shown in this Fig. 15, the rear projection device (or, unit) includes a light source 110B, a light funnel 125, functioning as the integrator, a polarized light conversion element 130B, a light condensing lens 142, a field lens 146, a polarizing plate 151, a polarized light beam splitter prism (hereinafter, being abbreviated as "PBS prism") 152, a reflection-type liquid crystal panel 150B, a polarizing plate 153, a projection device 10, and a Fresnel lens sheet 160. However, in this Fig. 15, also the illustration of the Fresnel lens sheet 160 (see Fig. 2) is omitted therefrom, as the optical direction conversion unit.

Firstly, similar to the above, the light source 110B comprises a lamp 101 and a reflector 103. The lamp 101 is a white color lamp, such as, the high-pressure mercury lamp, for example. The reflector 103 is disposed so as to cover the lamp 101 from the rear side thereof, and has the reflection surface of configuration in an ellipsoid of revolution or a spheroid. With this, the light emitting from the lamp 101, which is disposed at a first focal point of the reflector 103, is reflected upon the reflector 103 having the reflection surface of the spheroid configuration, and is condensed onto an incident surface 125a of the light funnel 125, which is disposed in vicinity of a second focal position of the reflector 103, to be incident thereupon. Thus, the reflector 103 functions as a light condenser unit for condensing the light emitted from the lamp 101 onto the incident surface 125 of the light funnel 125. Of course, in the similar manner to that of the variation mentioned above, and it is alsso possible to apply the reflection mirror of the spheroid configuration, as the reflector 103, so as to condense the light onto the incident surface 125a of the light funnel 125.

On the other hand, the light funnel 125 is constructed with a hollow optical pipe (i.e., a light pipe), such as, a kaleidoscope, for example, and has a function of uniformizing (or equalizing) the distribution of the light amount of the incident light, repeating the total reflection of the incident light by a plural number of times; however, in the place thereof, a light pipe may be applied, in which a cross-section area perpendicular to the optical axis 115 comes large, gradually, toward the emission side. However, there may be applied a solid rod lens in the place thereof.

Next, the light beam incident upon the light funnel 125 repeats the total reflection on the side surface of the light funnel, a plural number of times, and is in the condition that the lights of various angles are piled up on the emission surface 125b; i.e., the distribution of light mount becomes uniform. Also, since the cross-sectional configuration of the light funnel 125 comes large on the emission side, then the light beam angle emitting from the emission surface 125b is nearly or almost parallel to the optical axis. This light emitting from the light funnel 125 is incident upon the polarized light conversion element 130B.

Also, the polarized light conversion element 130B includes a PBS prism 41 having a PBS film 41a, which is provided on the emission surface 125b of the light funnel 125, a total reflection prism 42 having a total reflection film 42a, which is disposed on the side, into which the S-polarized light reflecting upon the PBS film 41a of the PBS prism 41 directs, and a λ/2 phase difference plate 43 provided on the emission surface 41b, from which the P-polarized light penetrating through the PBS film 41a of the PBS prism 41 emits.

In such constructions as mentioned above, among the lights having no polarization, being incident from the light funnel 125 upon the PBS prism 41 of the polarized light conversion element 130B and uniform in the distribution of light amount, the light of S-polarization (i.e., the S-polarized light) is reflected upon the PBS film 41a,to be incident upon the total reflection prism 42, and is reflected upon the total reflection film 42a, thereby emitting from the emission surface 42b of the total reflection prism. Also, the light of P-polarization (i.e., the P-polarized light) incident upon the PBS prism 41 penetrates through the PBS film 41a, to be emitted from the emission surface 41b, and it is further converted into the S-polarized light through the λ/2 phase difference plate 43, to be emitted therefrom. In this manner, the lights having no polarization, being incident upon the polarized light conversion element 130B, are aligned into the S-polarized light through the polarized light conversion element 130B.

However, since upon the polarized light conversion element 130B is incident the light beam, which made nearly parallel to the optical axis 115 through the light funnel 125 extending to the emission side, then it is possible to achieve separation of the polarized lights by means of the PBS film 41a, with high efficiency. Also, the configuration of the emission surface of the polarized light conversion element 130B, which is made up with the emission surfaces 41b and 41b, is almost analogous to that of the reflection-type liquid crystal panel 150B.

Also, the light condenser lens 142 is a relay lens for mapping the emission surface of the polarized light conversion element 130B onto the reflection-type liquid crystal panel 150B. Thus, the S-polarized light emitting from the polarized light conversion element 130B is condensed through the light condenser lens 142, is made nearly parallel to the optical axis, by the function of the field lens 146, and it passes through the polarizing plate 151 and reflected upon the PBS prism 152, thereby to be incident upon the reflection-type liquid crystal panel 150B. Since this modulation light image is made of the P-polarized light, which is formed through modulation by the reflection-type liquid crystal panel 150B, then this time, it penetrates through the PBS prism 152, and it is increased in the contrast thereof by the polarizing plate 153, thereby to be enlarged and projected through the projection device 10 toward the image display liquid crystal panel.

<Variation 3>

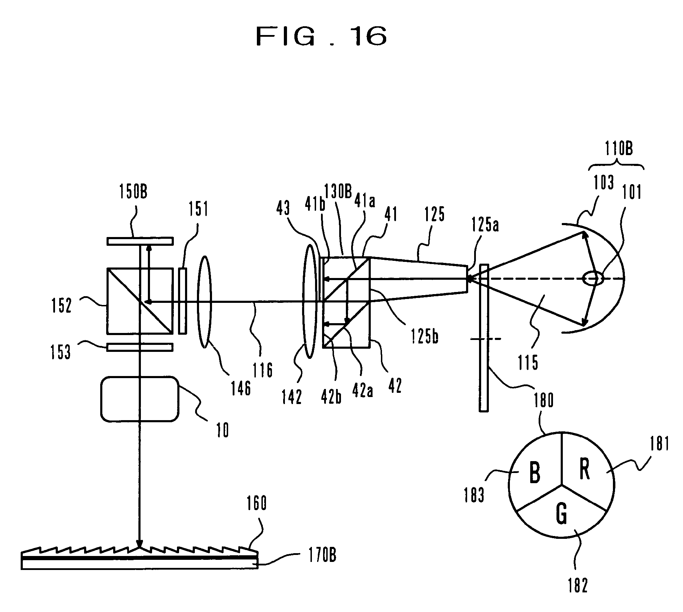

Further, hereinafter, explanation will be given on a liquid crystal display apparatus of direct-vision type for achieving further cost down thereof, upon basis of the variation 2 mentioned above, and in particular, on further variation of the rear projection device (or, unit) 100 for illuminating (i.e., irradiating the backlight) that liquid crystal panel 170 from the rear thereof, by referring to Fig. 16 attached herewith.

The image display apparatus, according to the present variation, differs from the variation 2 mentioned above, in an aspect that a color wheel is disposed in vicinity of the incident surface 125a of the light funnel 125, as a time-division color separation unit. With using the color wheel, it is possible to achieve time-division display (i.e., sequential color display) of a color image, on the image display light modulation unit for conducting a monochromatic display (i.e., white-black display). Accordingly, in case when applying the liquid crystal panel to be the image display light modulation unit, it is possible to omit a color filter that must be equipped with the liquid crystal panel for conducting a color display. Also, in case when conducting the color display, though one (1) pixel is constructed with a set of color pixels (i.e., R-pixel, G-pixel, and B-pixel), however in case of the monochromatic display, since the display is made by one (1) pixel, then it is possible to use a panel having a less number of pixels, as a whole. Then, it is possible to achieve the cost down.

Firstly, Fig. 16 is a view for showing the diagrammatic structures of the image display apparatus, according to the embodiment 3. In this Fig. 16, a reference numeral 180 depicts a color wheel, and 170B a image display liquid crystal panel for conducting the monochromic display mentioned above.

The color wheel 180 is a disc, being made up with a R-light filter 181 for penetrating through a R-light (red color light), a G-light filter 182 for penetrating through a G-light (green color light), and a B-light filter 183 for penetrating through a B-light (blue color light), each extending in the peripheral direction, at a predetermined ratio thereof, and has a rotation axis (not shown in the figure) at a center thereof, to be rotated by a driver unit not shown in the figure at high speed. The color wheel 180 being constructed in this manner is disposed, between the light source 110B and the light funnel 125, in the vicinity of the incident surface 125a of the light funnel 125.

In such structures, the focus light of nearly white color emitted from the light source 110B is separated, time-sequentially, by means of the color wheel 180, into R-light, G-light and B-light. And, the color light, uponwhich the color separation is made through the color wheel 180 is incident upon the light funnel 125, and after being equalized or uniformed in the light amount distribution thereof, comes to be the S-polarized light upon the polarized light conversion element 130B, and further modulated upon the reflection-typeliquid crystalpanel,and thesaidlight modulation image is irradiated, enlargedly, upon the image display liquid crystal panel 170B, by the projection device 10. The image display liquid crystal panel 170B conducts the light modulation upon the modulation light image irradiated thereupon, so as to build up an image of high contrast. Through such processes, an image of the R-light, and image of G-light and an image of B-lightare formed on the image display liquid crystal panel 170B, time-sequentially, and are visually acknowledged, as a color image.

Namely, according to the color direct-vision type image display apparatus with such the structures, it is possible to achieve the cost down thereof. However, in the above was explained the example of applying the reflection-type liquid crystal panel in the light modulation unit for use of light modulation, but may be applied the micro mirror, in the place thereof. Since this micro mirror is larger in the contrast ratio than the liquid crystal panel, therefore it can be applied, more preferably.

Further, within the various kinds of the embodiments mentioned above, the explanation was given that the polarizing plates are provided on both sides, i.e., the incidence side and the emission side of the image display liquid crystal panel 170. However, in particular, in the case of the direct-vision type image display apparatus, according to the present invention, the screen size thereof is large. Then, in case when applying the liquid crystal panel 150 as the light modulation unit for use of light modulation (for example, please see the reference numeral 150 in Fig. 2), an increase of degree of polarization by disposing two (2) pieces of the polarizing plates on the emission side, between the polarizing plates disposed in the front and the rear of the liquid crystal panel on the optical path, enables to cancel the polarizing plate on the incidence side of the image display liquid crystal panel 170B. In this case, the size of the polarizing plate attached on the liquid crystal panel is almost similar to that of the liquid crystal panel, and then the cost-down caused due to cancelling the polarizing plate on the incidence side of the image display liquid crystal panel 170B is larger that the cost-up caused due to providing two (2) pieces of the polarizing plates on the emission side; as a result thereof, it is possible to achieve the cost-down of the direct-vision type image display apparatus. Also, in case of applying the micro mirrors into the light modulation unit for use of light modulation, the polarizing plate can be removed on the incidence side of the image display liquid crystal panel 170B, since with that micro mirrors, it is possible to obtain the contrast ratio, being fully large, comparing to that of the liquid crystal panel.

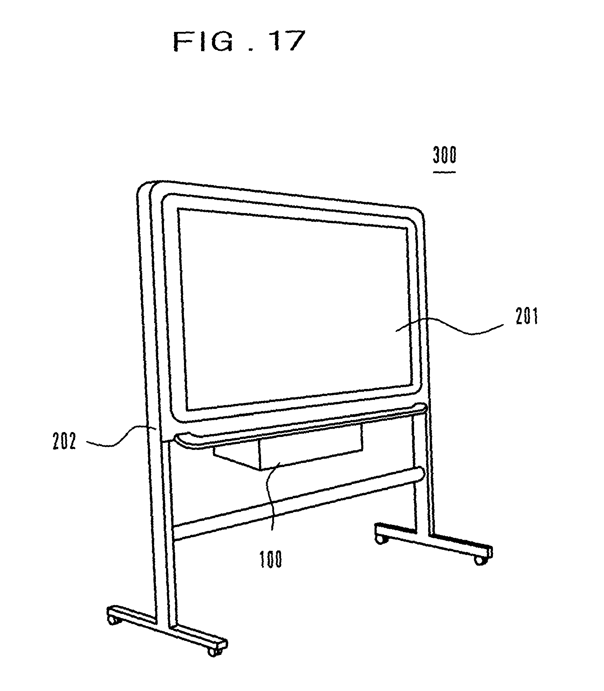

Lastly, Figs. 17 through 19 shows an example of applying the liquid crystal display apparatus mentioned above, i.e., the direct-vision type thin image display apparatus, into a presentation apparatus, such as, an electronic blackboard apparatus, for reading the contents writing thereon, as well as, various kinds of pictures thereon, so as to display them clearly. Thus, this electronic blackboard apparatus 300 is built up by attaching the liquid crystal panel 170, i . e . , being the large-size direct-vision type display apparatus, on a frame body 202 of a removable caster, for example. Further, this electronic blackboard apparatus is used, in many cases, under the condition that a user writes down explanations or the like thereon, while standing on the front surface side of the display screen 201 thereof, and for that reason, on the front surface side of the liquid crystal panel 170, i.e., the display apparatus, is further provided a transparent glass plate 250, for enabling the user to write on the display screen 201, as well as, for protecting the liquid crystal panel 170. And, in this figure, also the rear projection device (or, unit) 100 is attached on a lower side portion of the frame body 202 of the caster, for projecting the rear surface light (i.e., the backlight) from the rear surface of the large-size liquid crystal panel 170, in the oblique direction.

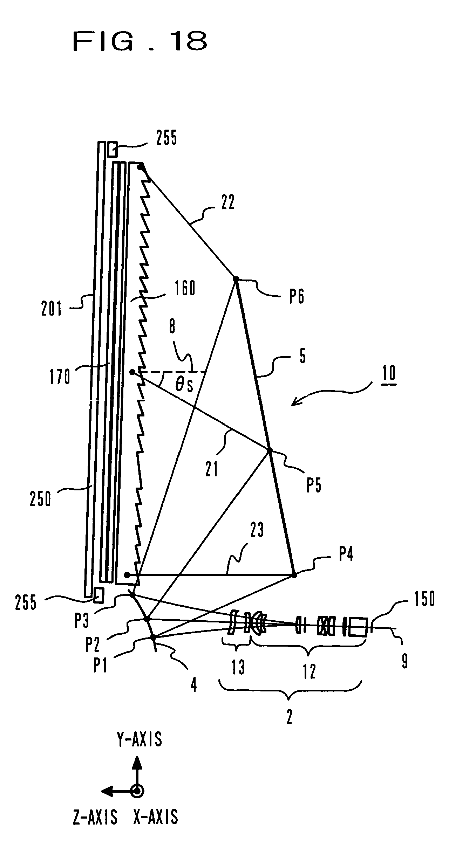

Fig. 18 attached herewith shows the electronic blackboard apparatus mentioned above, diagrammatically, in the similar manner to that shown in Fig. 3 mentioned above, in particular, including the short-range oblique projection optic system for projecting the light upon the rear surface side of the liquid crystal display apparatus, enlargedly, in the oblique direction from the short distance. As a difference from that of the optic system shown in Fig. 3 mentioned above, as was mentioned previously, on the front surface side of the liquid crystal panel 170 is provided the glass plate 250 having almost similar size (however, in the present example, it is a little bit bigger), so as to cover that panel, and on a peripheral portion thereof is provided a touch sensor 255 for building up a touch input portion for detecting the writing on the display screen 201. In this Fig. 18, the plane reflection mirror 5 is provided with inclining to the vertical direction, however it may be provided standing at the right angle, as is shown in Fig. 1.

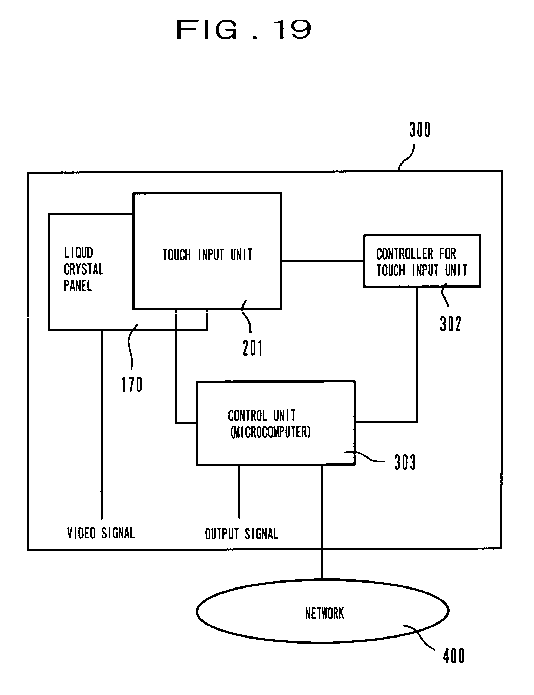

In addition thereto, Fig. 19 attached is a block diagram for showing an example of the structures of the electronic blackboard apparatus mentioned above. In this figure, the electronic blackboard apparatus 300 comprises the followings, as well as, the rear projection device (or, unit) 100 for building up the short-distance oblique projection optic system of the liquid crystal display apparatus shown in Fig. 2 mentioned above: i.e., a touch input portion or unit 201 (including the touch sensor 255 mentioned above) for electrically inputting characters and/or figures, etc. , which are/is written by touching a finger or a touch pen on the glass place disposed on the front surface of the liquid crystal panel 170 for displaying the images thereon, so as to display or delete it/them thereon; a controller (for example, being constructed with a microcontroller, etc.) 302 for use of the touch input portion, for conducting calculations of the coordinate positions upon the front surface, on which it is touched on, by the finger or the touch pen; and a control portion or unit(also being constructed with a microcontroller, etc.) 303 for inputting the coordinate position information from that controller 302, so as to conduct processes for drawing characters/figures etc. , which are inputted through the touch input unit 201, on the liquid crystal panel 170 or the like, and further for controlling the system as the entire thereof, etc.

Also, with the electronic blackboard apparatus 300, it is possible to connect various kinds of peripheral equipments. For example, it is possible to connect a scanner for reading out an image of a manuscript, or a printer for outputting the image data on a recording paper, etc., can be connected with that control unit 303. Also, through the control unit 303, the electronic blackboard apparatus can be connected with a network 400, and thereby enabling to display the data, which is produced within other computer connected on that network upon the liquid crystal panel 170, and also to transmit the data, which is produced by the electronic blackboard apparatus 300, to the other computer.

Further, though not shown in the figure herein, but the liquid crystal panel 170 is provided with an input terminal (s) and a speaker(s) for the audio/video signal thereon, and therefore it can be used as a large screen monitor thereof, being connected with various kinds of information equipments, such as, a video player, representatively, and also including a laser disc player, a DVD player, a video camera, etc., and/or with various kinds of AV equipments. Further, in the place of the above-mentioned, it is also possible to apply a touch input apparatus of ultrasonic surface acoustic wave method, as that touch input unit 201.

In such the electronic blackboard apparatus, it is also possible to protect that liquid crystal panel 170 and the polarizing plates attached on a part thereof from being deteriorated by the heat generation, in the similar manner to that of the liquid crystal display apparatus, by suppressing the heat transfer from the heat generation sources, including the rear projection device (or, unit) 100 and the driver circuit thereof, etc., to the liquid crystal panel 170. In particular, as was mentioned above, since the liquid crystal panel 170 is provided with the glass plate 250 covering over the front surface thereof, the heat generation on the rear surface thereof can easily stay within the housing thereof; however, with such the structures as was mentioned above, even in such the case, it is possible to dissolve a problem of giving something feeling wrong or uncomfortable to the user of the electronic blackboard apparatus, by suppressing the heat generation from the rear projection device (or, unit) 100 or the like, to be transferred to the liquid crystal panel 170 and/or the glass plate 250 covering over the surface thereof.

However, the explanation given in the above was mainly mentioned about only the example of disposing the rear projection device (or, unit) 100, for irradiating the backlight upon the image display liquid crystal panel 170, enlargedly, from the rear thereof, below that liquid crystal panel 170; but the present invention shouldnot be restricted only to such the embodiment as was mentioned above, and therefore, it would be apparent that, for the person skilled in the art, the rear projection device (or, unit) 100 may be disposed, for example, above the liquid crystal panel 170, or also either one of the right or the left sides thereof, so as to obtain the effect same to those of the embodiment mentioned above.

While we have shown and described several embodiments in accordance with our invention, it should be understood that disclosed embodiments are susceptible of changes and modifications without departing from the scope of the invention. Therefore, we do not intend to be bound by the details shown and described herein but intend to cover all such changes and modifications that fall within the ambit of the appended claims.

**Claims**

1. A liquid crystal display apparatus, comprising:

   a liquid crystal display apparatus; and
   a rear projection unit for projecting a rear surface light on said liquid crystal display apparatus from a rear surface side thereof, wherein
   said rear projection unit has an oblique projection optic system for projecting a light from a light source upon said liquid crystal display apparatus, enlargedly and obliquely, from a rear surface side thereof.

2. The liquid crystal display apparatus, as described in the claim 1, wherein said oblique projection optic system includes a free curved surface mirror disposed in a part thereof, so as to reflect the light from said light source thereupon, thereby projection the rear surface light said liquid crystal display apparatus, from a rear surface side thereof.

3. The liquid crystal display apparatus, as described in the claim 2, wherein between said free curved surface mirror and the rear surface of said liquid crystal display apparatus is further disposed a plane-surface reflection mirror.

4. The liquid crystal display apparatus, as described in the claim 1, wherein on a rear surface of said liquid crystal display apparatus is further provided a light direction converter unit for emitting the light incident from said oblique projection optic system, nearly vertical to a display surface of said liquid crystal display apparatus.

5. The liquid crystal display apparatus, as described in the claim 1, wherein in a part of said oblique projection optic system is provided a light modulator unit for modulating a light intensity of said light.

6. The liquid crystal display apparatus, as described in the claim 1, wherein said oblique projection optic system further comprises a free curved surface lens.

7. The liquid crystal display apparatus, as described in the claim 1, further comprising a means for equalizing a light mount distribution of illumination light from said light source, between said light source and said liquid crystal panel.

8. An electronic blackboard apparatus, applying said liquid crystal display apparatus as described in the claim 1, as a display surface thereof.

9. A rear projection unit, to be used as a backlight for a liquid crystal display apparatus, being constructed with an oblique projection optic system for projecting a light from a light source upon said liquid crystal display apparatus, obliquely and enlargedly, from a rear surface side of said liquid crystal display apparatus, comprising:

a free curved surface mirror, in a part thereof, for reflecting the light from said light source, thereby projecting a light upon said liquid crystal display apparatus from the rear surface thereof.

10. The rear projection unit, as described in the claim 9, wherein between said free curved surface mirror and the rear surface of said liquid crystal display apparatus is further disposed a plane-surface reflection mirror.

11. The rear projection unit, as described in the claim 9, further comprising a light modulator unit for modulating a light intensity of said light, in a part thereof.

12. The rear projection unit, as described in the claim 9, further comprising a free curved surface lens.

13. The rear projection unit, as described in the claim 9, further comprising a means for equalizing light amount distribution of an illumination light from said light source, between said light source and said free curved surface mirror.

# FIG . 1

# FIG . 2

# FIG . 3

Y-AXIS

Z-AXIS    X-AXIS

# FIG . 4

14

13

12

150

2

X-AXIS

Y-AXIS    Z-AXIS

FIG . 5

EP 2 026 571 A2

# FIG . 6

170

5

150

4

13        12

2

Y-AXIS

Z-AXIS  X-AXIS

FIG . 7

170

5

4

13

12

150

X-AXIS

Z-AXIS   Y-AXIS

FIG . 8

# FIG . 9

FIG . 10(a)

FIG . 10(b)

# FIG . 11

# FIG . 12

# FIG . 13

# FIG . 14

FIG . 15

# FIG . 16

# FIG . 17

# FIG . 18

Y-AXIS

Z-AXIS   X-AXIS

# FIG . 19

LIQUID CRYSTAL PANEL

TOUCH INPUT UNIT

CONTROLLER FOR TOUCH INPUT UNIT

302

201

170

CONTROL UNIT (MICROCOMPUTER)

303

VIDEO SIGNAL

OUTPUT SIGNAL

NETWORK

400

300

# FIG . 20

VIDEO SIGNAL

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006030588 A
- JP HEI6230367 B
- JP HEI10229463 B
- JP HEI1138902 B
- WO 2004049059 A
- JP 2006154719 A
- JP 2005091541 A